Europäisches Patentamt

European Patent Office

Office européen des brevets

(19)

(11) **EP 0 582 116 B1**

(12) **EUROPÄISCHE PATENTSCHRIFT**

(45) Veröffentlichungstag und Bekanntmachung des Hinweises auf die Patenterteilung:
**27.01.1999 Patentblatt 1999/04**

(51) Int Cl.⁶: **G02B 6/38**

(21) Anmeldenummer: **93111486.2**

(22) Anmeldetag: **16.07.1993**

(54) **Verfahren zur Ermittlung der Lage von Lichtwellenleitern und Einrichtung zur Durchführung des Verfahrens**

Method for determining the position of light wave guides and device for carrying out the method

Procédé pour déterminer la position des guides d'ondes lumineuses et dispositif pour mettre en oeuvre le procédé

(84) Benannte Vertragsstaaten:
**AT BE CH DE FR GB IT LI NL SE**

(30) Priorität: **07.08.1992 DE 4226201**

(43) Veröffentlichungstag der Anmeldung:
**09.02.1994 Patentblatt 1994/06**

(73) Patentinhaber: **SIEMENS AKTIENGESELLSCHAFT**
**80333 München (DE)**

(72) Erfinder: **Lieber, Winfried, Dr.-Ing.**
**D-77654 Offenburg (DE)**

(56) Entgegenhaltungen:
EP-A- 0 303 990    EP-A- 0 423 543
DE-B- 2 411 814    US-A- 4 735 481

- **ZWF ZEITSCHRIFT FÜR WIRTSCHAFTLICHE FERTIGUNG UND AUTOMATISIERUNG Bd. 85, Nr. 12, Dezember 1990, MUNCHEN DE Seiten 656 - 660 L. KIESEWETTER ET AL. 'Automatisierbare Fügetechniken für Glasfasern in schaltbaren Koppelelementen'**
- **NACHRICHTENTECHNISCHE ZEITSCHRIFT Bd. 41, Nr. 4, 1988, BERLIN Seiten 230 - 233 TH. EDER ET AL. 'Einmodenspleisse automatisch messen und herstellen'**

EP 0 582 116 B1

**Beschreibung**

Aus der DE 39 00 406 A1 ist ein Verfahren zur Überprüfung der Ausrichtzustände von Glasfasern in einem Paar von Bandfaserkabeln bekannt. Dazu ist ein reflektierender Spiegel benachbart zu den Glasfasern eines Paares von Bandleitungen angeordnet. Beleuchtendes Licht wird in die Glasfasern in einer Ebene zugeführt, die von der normalen Richtung einer durch die Glasfasern gebildeten Ebene unterschiedlich ist. Zum einen wird eine Abbildung beobachtet, die durch das beleuchtende Licht entsteht, das durch den Spiegel reflektiert und dann durch die Glasfasern geleitet wird. Ebenso wird eine Abbildung betrachtet, die durch das beleuchtende Licht gebildet wird, das durch die Glasfasern geführt und dann vom Spiegel reflektiert wird.

Bei diesem bekannten Verfahren wird vorausgesetzt, daß die Glasfasern jeweils an den sich gegenüberstehenden Bandleitungen einzeln herausgelöst sind. Das sie umgebende, sie zusammenhaltende Material ist also entfernt und dadurch die Glasfasern frei beweglich. Die ist für eine Beobachtung der Ausrichtzustände der Glasfasesrn notwendig, um sie von außen seitlich beleuchten und ihre Konturen einzeln und getrennt voneinander optisch abbilden zu können. Das bekannte Meßverfahren erlaubt somit nur Aussagen und Rückschlüsse über die örtliche Verteilung der freigelegten Glasfasern auf indirektem Weg. Hingegen kann die tatsächliche, örtliche Intensitätsverteilung des Lichtes, das jeweils im Kern der Lichtwellenleiter geführt wird, nur mit einem hohen Aufwand meßtechnisch zugänglich gemacht werden. Aussagen zu den realen Lichtintensitäts-Verhältnissen in den beiden Bandleitungen können mit dieser bekannten Methode im wesentlichen nur eingeschränkt getroffen werden. Dadurch ist das Ausrichten der Bandleitungen aufeinander z.B. für Spleißzwecke relativ ungenau.

Der Artikel "Einmodenspleiße automatisch messen und herstellen", ntz Bd. 41 (1988) Heft 4, Seiten 230 - 233, Th. Eder et al beschäftigt sich lediglich damit, ein einzelnes Lichtleitfaserende auf ein zweites einzelnes Lichtleitfaserende auszurichten und diese miteinander zu verschweißen. Dazu wird fortlaufend Meßlicht in eine der beiden Lichtleitfasern eingekoppelt, während die eine Lichtfaser gegenüber der anderen Lichtleitfaser lateral verschoben wird. Das von der einen in die andere Lichtleitfaser übergekoppelte Meßlicht wird laufend gemessen. Wird der Lichtpegel des zwischen den beiden Faserenden übergekoppelten Meßlichts maximal, so ist eine optimale Justierung erreicht.

Der Artikel "Automatisierbare Fügetechniken für Glasfasern in schaltbaren Koppelelementen, Teil II" in ZWF CIM Zeitschrift für Wirtschaftliche Fertigung und Automatisierung" 85(1990) Dezember, No. 12, München, DE, Seiten 656-660, L. Kiesewetter et al. beschäftigt sich damit, ein Relais auf gegenüberliegenden Seiten mit Lichtleitfasern zu bestücken. Dazu wird beidseitig des zu bestückenden Relais jeweils lediglich eine einzelne Lichtleitfaser in einem Faserhalter lagefixiert. Zwischen den beiden, sich gegenüberstehenden Faserhaltern ist das Relais auf einem Prismentisch angeordnet, der lateral zur Längserstreckung der beiden ortsfest positionierten Fasern mit Hilfe eines motorisch angetriebenen Positioniersystems verschiebbar ist. Beim Ausrichten des Relais wird Meßlicht, das zwischen den sich auf dem Relais gegenüberstehenden Enden der beiden Fasern überkoppelt, fortlaufend gemessen und der Koppelwirkungsgrad zwischen den beiden Fasern bestimmt. Dadurch kann eine optimierte Relaisausrichtung gefunden werden, bei der die Vorlauf- und Nachlauffaser schließlich auf dem Relais durch Kleben fixiert werden. Um das Relais mit mehreren Fasern pro Seite bestücken und ihnen auf der Gegenseite entsprechende Lichtleitfasern zuordnen zu können, muß der Bestückungsvorgang für eine einzelne Faser so oft wiederholt werden, wie Fasern auf das Relais aufgebracht werden sollen. Dies ist sehr zeit- und arbeitsaufwendig.

Der Erfindung liegt die Aufgabe zugrunde, einen Weg aufzuzeigen, wie bei zwei Gruppen von jeweils mehreren Lichtwellenleitern die örtliche Lage von mehreren Lichtwellenleitern in der jeweiligen Gruppe einfacher und zuverlässiger bestimmt werden kann. Gemäß der Erfindung wird diese Aufgabe durch folgendes Verfahren dadurch gelöst:

Verfahren zur Ermittlung der örtlichen Lage von Lichtwellenleitern, die jeweils zu mehreren Gruppen und dort jeweils in einer Ebene nebeneinander angeordnet sind, unter Verwendung einer Sendeeinrichtung, die einer der beiden Gruppen zugeordnet ist, wobei eine erste der beiden Gruppen relativ gegenüber der zweiten Gruppe in mindestens eine Richtung parallel zu derjenigen Ebene, in der die Längsachsen der Lichtwellenleiter der zweiten Gruppe liegen, mindestens einmal verschoben wird, wobei während dieses Verschiebevorgangs von der Sendeeinrichtung Licht in mindestens einen Lichtwellenleiter einer der beiden Gruppen eingekoppelt wird, wobei während des Verschiebevorgangs aus dem jeweilig an der Sendeeinrichtung angekoppelten Lichtwellenleiter fortlaufend Licht jeweils in mindestens einen Lichtwellenleiter der anderen Gruppe übergekoppelt wird, wobei während des Verschiebevorgangs jeweils der zeitliche Intensitätsverlauf des eingekoppelten Lichts in diesem Lichtwellenleiter der anderen Gruppe aufgenommen wird, wobei die Relativbewegung der beiden Gruppen gegeneinander derart durchgeführt wird, daß mit dem während der Verschiebebewegung aufgenommenen Licht eine zeitliche Gruppen-Intensitätsverteilung gewonnen und festgehalten wird, durch die den lichtdurchlaufenen Lichtwellenleitern der jeweiligen Gruppe Einzel-Intensitätsverteilungen getrennt zugeordnet werden, und wobei aus diesen Einzel-Intensitätsverteilungen der festgehaltenen zeitlichen Gruppen-Intensitätsverteilung die relative örtliche Lage der Lichtwellenleiter in der jeweiligen Gruppe bestimmt und zu Auswertezwecken festgehalten wird.

Die Erfindung zeichnet sich vor allem dadurch aus, daß durch eine einfache Relativbewegung der beiden Gruppen von Lichtwellenleitern gegeneinander die örtliche Intensitätsverteilung der Lichtwellenleiter in den beiden Gruppen

EP 0 582 116 B1

jeweils individuell, das heißt selektiv für jeden Lichtwellenleiter, auf direktem Weg bestimmt werden kann. Aus den gruppenweisen örtlichen Intensitätsverteilungen der Lichtwellenleiter kann deren tatsächliche, örtliche Lage, d.h. deren Lage relativ zueinander, mit hoher Ortsauflösung individuell ermittelt werden. Die einfache Verschiebebewegung ist ohne großen Aufwand durchführbar. Außerdem sind bei den meisten Meßeinrichtungen für Lichtwellenleiter, wie zum Beispiel bei Spleißgeräten oder Durchgangsdämpfungs-Meßgeräten, ohnehin Haltevorrichtungen oder Stellelemente zum Verschieben der Lichtwellenleiter bereits vorhanden. Ein zusätzlicher, mechanischer Aufwand zur Durchführung des erfindungsgemäßen Verfahrens ist somit in diesem Falle nicht erforderlich. Gleichzeitig bietet die einfache Verschiebebewegung der beiden Gruppen gegeneinander den Vorteil, daß ein Abbild der relativen Lage der beiden Gruppen von Lichtwellenleiter zueinander relativ schnell bestimmt werden kann.

Gemäß einer ersten, zweckmäßigen Weiterbildung der Erfindung können jeweils die Lichtwellenleiter einer Gruppe mechanisch miteinander verbunden sein, vorzugsweise in einer äußeren Umhüllung einer Bandleitung. Die relative örtliche Verteilung bzw. Position der Lichtwellenleiter in einem solchen mechanisch fixierten Verband kann ohne ein Herauslösen bzw. Freilegen der Lichtwellenleiter zuverlässig ermittelt werden. Der Grund dafür ist, daß Anteile der jeweils in den Lichtwellenleitern geführten Lichtleistung auf direktem Weg individuell gemessen werden kann. Es kann also eine Größe gemessen werden, die proportional zur geführten Lichtleistung ist.

Die Kenntnis der jeweils tatsächlich geführten Lichtleistung (in mW) ist für die Messung und Auswertung nicht notwendig.

Gemäß einer zweiten, zweckmäßigen Weiterbildung der Erfindung wird in einem ersten Meßvorgang die örtliche Intensitätsverteilung der Lichtwellenleiter in der ersten Gruppe gewonnen und anschließend in einem zweiten Meßvorgang die örtliche Intensitätsverteilung der Lichtwellenleiter in der zweiten Gruppe. Zu diesem Zweck wird zuerst Licht aus den örtlich zu vermessenden Lichtwellenleitern der ersten Gruppe in mindestens einen Beobachtungs- bzw. Meß-Lichtwellenleiter der zweiten Gruppe und dann Licht aus zumindestens einem Lichtwellenleiter der zweiten Gruppe in mindestens einen Beobachtungs- bzw. Meß-Lichtwellenleiter der ersten Gruppe eingekoppelt. Der Beobachtungs-Lichtwellenleiter für die erste bzw. zweite Gruppe wird dabei zweckmäßigerweise relativ zu den jeweils zu vermessenden Lichtwellenleitern in mindestens einer Ebene quer zu deren Längsachse vorbeibewegt. Der Beobachtungs-Lichtwellenleiter kann beispielsweise ein ausgewählter Lichtwellenleiter der gegenüberstehenden, jeweils gerade nicht untersuchten Gruppe oder ein eigens vorzusehender Meß-Lichtwellenleiter sein. Die beiden aufgenommenen Gesamt-Intensitätsverteilungen der Lichtwellenleiter der beiden Gruppen können vorteilhaft miteinander korreliert werden, so daß der Ort maximaler Übereinstimmung bzw. "Verwandtschaft" zwischen den beiden Gruppen ermittelt werden kann. Dieser Ort optimaler Ausrichtung, d.h. optimaler Ausrichtzustand, zwischen den beiden Gruppen kann dann insbesondere zum Verschweißen zweier Bandleitungen angefahren werden, bei denen kein individuelles Ausrichten korrespondierender Lichtwellenleiter-Paare möglich ist.

Gemäß einer dritten zweckmäßigen Weiterbildung der Erfindung werden die Lichtwellenleiter der ersten Gruppe in mindestens einer Ebene quer zur Längsachse der Lichtwellenleiter der zweiten Gruppe mindestens einmal relativ zueinander verschoben. Aus dem zeitlichen Verlauf der Intensitätsverteilung des übergekoppelten Lichtes von den Lichtwellenleitern der zweiten Gruppe zu den Lichtwellenleitern der ersten Gruppe (oder auch umgekehrt) kann vorteilhaft die relative Lage der Lichtwellenleiter der ersten Gruppe gegenüber den Lichtwellenleitern der zweiten Gruppe direkt gewonnen werden.

Zweckmäßigerweise wird die Verschiebebewegung der ersten Gruppe gegenüber der zweiten Gruppe von einer Position aus gestartet, bei der für jedes korrespondierende Lichtwellenleiterpaar jeweils ein Maximum für deren Einzel-Intensitätsverteilung bzw. Einzel-Leistung Leistungspegel oder Koppelwirkungsgrad noch überschritten werden kann. Dazu wird z.B. die erste Gruppe gegenüber der zweiten Gruppe so weit verfahren, daß diese sich nicht mehr gegenüberstehen. Vorteilhaft kann es auch sein, die erste Gruppe gegenüber der zweiten Gruppe nur etwas hin- und herzubewegen, d.h. eine Art Zitterbewegung ("Jitter"-Bewegung) auszuführen. Die "Jitter"-Bewegung hat den Vorteil, daß mit hoher Geschwindigkeit nur relativ kleine Verschiebebewegungen der beiden Gruppen gegeneinander für eine Meßaufnahme erforderlich sind. Insbesondere wird bei der Jitter-Bewegung die erste Gruppe gegenüber der zweiten Gruppe um etwa den größten verbleibenden Versatz des am schlechtesten ausgerichteten Lichtwellenpaares hin- und herverfahren. Dieses Vorgehen ermöglicht in einfacher Weise eine sehr schnelle und präzise Lagebestimmung der beiden Gruppen von Lichtwellen leitern relativ zueinander.

Vorteilhaft wird diejenige Gesamt-Intensitätsverteilung bzw. Gesamt-Leistungsverteilung oder Gesamt-Koppelwirkungsgrad während der Verschiebebewegung bzw. "Jitter"-Bewegung registriert, für die alle korrespondierenden Lichtwellenleiter-Paare gemeinsam im zeitlichen Verlauf der gemessenen Gesamt-Intensitätsverteilung gleichzeitig ihre größten, individuellen Einzel-Intensitätsverteilungen bzw. Leistungspegel zeigen. Der zugehörige Verschiebe-Ort bestimmt dann zweckmäßigerweise den optimalen Ausrichtzustand, d.h. der Ort maximaler "Verwandtschaft", zwischen den beiden aufeinander auszurichtenden Gruppen.

Gemäß einer vierten, zweckmäßigen Weiterbildung der Erfindung kann für den mit Hilfe der Verschiebebewegung bzw. Jitter-Bewegung gewonnenen, optimalen Ausrichtzustand eine Spleißverbindung zwischen den beiden miteinander zu verbindenden Gruppen von Lichtwellenleitern durchgeführt werden. Dies spielt bei Mehrfaserverbindungen, wie z.B. bei zwei miteinander zu verschweißende Bandleitungen insofern eine Rolle, da ja im Fall zweier jeweils mechanisch fixierter Gruppen von Lichtwellenleitern eine individuelle, fluchtende, d.h. ideale Ausrichtung der Kerne zweier korrespondierender Lichtwellenleiter der ersten und zweiten Gruppe nicht möglich ist. Vorteilhaft läßt sich dann im optimalen Ausrichtzustand, d.h. am Ort maximaler Verwandtschaft, eine Spleißverbindung, insbesondere eine Verschweißung korrespondierender Lichtwellenleiter-Paare bzw. Lichtwellenleiter-Kombinationen in einem Mehrfach-Spleißgerät, durchführen. Dies ermöglicht vorteilhaft ausreichend gute Spleißverbindungen zwischen jeweils zwei korrespondierenden Lichtwellenleitern der ersten und zweiten Gruppe bei gleichzeitiger Reduzierung der Kosten und Fertigungszeit pro Einzel-Spleißverbindung.

Eine weitere, zweckmäßige Weiterbildung der Erfindung betrifft ein Verfahren zum Verspleißen einer ersten und einer zweiten Gruppe von Lichtwellenleitern, wobei in mindestens einen der Lichtwellenleiter einer Gruppe Licht eingekoppelt wird, welches dadurch gekennzeichnet ist, daß das Verspleißen der Lichtwellenleiter der ersten Gruppe mit den Lichtwellenleitern der zweiten Gruppe mittels der zeitlichen Intensitätsverteilung des Lichtes gesteuert wird, das während des Verspleißens von mindestens einem Lichtwellenleiter der zweiten Gruppe in mindestens einen Lichtwellenleiter der ersten Gruppe übergekoppelt wird.

Zur Steuerung des Spleißvorganges, insbesondere beim Verschweißen, kann besonders zweckmäßig folgendermaßen vorgegangen werden: aus dem Verlauf der örtlichen Gesamt-Intensitätsverteilung des im Beobachtungs-Lichtwellenleiter bzw. in den Lichtwellenleitern der zweiten Gruppe geführten Lichtes wird in einfacher Weise dasjenige korrespondierende Lichtwellenleiterpaar identifiziert, das den größten radialen Versatz in der optimalen Aussicht-Position aufweist. Dieser Lichtwellenleiter-Kombination ist der kleinste relative Leistungspegel in der Gesamt-Intensitätsverteilung bzw. im Gesamt-Leistungspegel in eindeutiger Weise zugeordnet. Der kleinste relative Leistungspegel ist dabei der kleinste absolute Leistungspegel bezogen auf die im ausgerichteten Zustand gemessene maximale absolute Leistung. Den kleinsten Leistungspegel absolut zu messen ist nur schwierig möglich (und für die Auswertung auch nicht erforderlich), da der empfangene Pegel u.a. von den Ein- und Auskoppelwirkungsgraden des Senders und Empfängers abhängt (z.B. aufgrund unterschiedlicher Farbaufträge der zu messenden Lichtwellenleiter). Dessen zugehörige Einzel-Intensitätsverteilung bzw. Leistungspegel kann zweckmäßigerweise zur Steuerung des Spleiß-, insbesondere des Schweißvorganges für alle übrigen, korrespondierenden Lichtwellenleiter-Kombinationen der ersten und zweiten Gruppe verwendet werden. Auf diese Weise kann vorteilhaft für das am schlechtesten ausgerichtete Lichtwellenleiterpaar noch eine ausreichende Qualität des Spleißergebnisses und damit auch gleichzeitig für alle übrigen, korrespondierenden Lichtwellenleiterpaare sichergestellt werden. Diese Vorteile können auch dann noch weitgehend erreicht werden, wenn sich die beiden aufeinander auszurichtenden und gegebenenfalls miteinander zu verbindenden Gruppen in irgendeiner Ausrichtposition gegenüberstehen, die mittels anderer Methoden und Verfahren als der in der Erfindung vorgestellte Relativbewegung sowie der dabei auftretenden Lichtüberkopplung zwischen den beiden Gruppen gewonnen wird. Beispielsweise kann ein geeigneter Ausrichtzustand der beiden Gruppen auch mit Hilfe einer Videokamera ermittelt werden.

Eine weitere zweckmäßige Weiterbildung der Erfindung bezieht sich auf ein Verfahren zur Dämpfungsbestimmung zweier miteinander zu verspleißender Gruppen von Lichtwellenleitern, wobei in mindestens einen der Lichtwellenleiter einer Gruppe Licht eingekoppelt wird, welches dadurch gekennzeichnet ist, daß in einem ersten Meßschritt während der Verschiebebewegung zeitlich nacheinander jeweils zwei einander zugeordnete Lichtwellenleiter aufeinander fluchtend ausgerichtet werden, daß in diesem idealen Ausrichtzustand jeweils deren zugehörige Intensitätsverteilung selektiv bestimmt und festgehalten wird, daß in einem zweiten Meßschritt für die erste und die zweite Gruppe von Lichtwellenleitern ein optimaler Ausrichtzustand während des Verschiebevorganges ermittelt wird und diese dorthin verfahren werden, daß in diesem optimalen Ausrichtzustand für jeweils zwei korrespondierenden Lichtwellenleiter deren zugehörige Intensitätsverteilung gemessen und festgehalten wird, daß in einem dritten Meßschritt die beiden Gruppen in den ermittelten optimalen Ausrichtzustand gebracht werden, dort deren korrespondierende Lichtwellenleiter miteinander verspleißt werden und daß schließlich nach dem Spleißvorgang für jeweils zwei miteinander verbundenen Lichtwellenleitern deren zugehörige Intensitätsverteilung ermittelt und festgehalten wird, und daß aus den so in drei Meßschritten erhaltenen Intensitätsverteilungen für jeweils zwei miteinander verbundenen Lichtwellenleitern deren Spleiß-Dämpfung selektiv bestimmt wird.

Für die möglichst genaue Bestimmung optischer Übertragungskenngrößen nach dem Verbinden der beiden Gruppen von Lichtwellenleitern, insbesondere der Spleißdämpfung beim Verschweißen der Lichtwellenleiter zweier Bandleitungen, werden also insgesamt betrachtet folgende drei unabhängige Meßschritte im einzelnen durchgeführt:

In einem ersten Meßschritt werden die beiden noch unverbundenen und unausgerichteten Gruppen bzw. Bandleitungen so gegeneinander verschoben (z.B. durch eine Zitter-Bewegung), daß es jeweils zu einem individuellen, idealen Fluchten für jedes korrespondierende Lichtwellenleiter-Paar kommt (und zwar zeitlich nacheinander oder aber auch gleichzeitig für mehrere bzw. alle auszurichtenden Lichtwellenleiter.). Der Leistungspegel am Ort idealer Ausrichtung wird jeweils individuell für jede Lichtwellenleiter-Kombination registriert.

In einem zweiten Meßschritt werden die beiden Bandleitungen in einen optimalen Ausrichtzustand verfahren, der aus dem zeitlichen Verlauf der Gesamt-Intensitätsverteilung während der relativen Verschiebebewegung bzw. Jitter-Bewegung der beiden Gruppen gegeneinander bestimmt werden kann. Im optimalen Ausrichtzustand werden eben falls die Leistungspegel für die korrespondierenden Lichtwellenleiter-Kombinationen selektiv festgehalten.

Im dritten Meßschritt werden die korrespondierenden Lichtwellenleiter-Paare schließlich im optimalen Ausrichtzustand miteinander verspleißt, insbesondere verschweißt und auch hier die zugehörigen Leistungspegel für die Lichtwellenleiter-Kombinationen festgehalten.

Aus diesen drei Leistungspegeln können gegebenenfalls unter Berücksichtigung der Luftspalt-Übertragungskenngrößen zwischen jeweils zwei korrespondierenden Lichtwellenleitern, die tatsächlichen, individuellen optischen Übertragungskenngrößen, insbesondere die Spleißdämpfung für jedes miteinander verbundene Lichtwellenleiter-Paar selektiv mit hoher Genauigkeit berechnet werden.

Die Durchführung der drei Meßschritte ist dabei nicht an das vorgestellte erfindungsgemäße Verfahren zur Ermittlung der Lage von Lichtwellenleitern gebunden, sondern auch in Kombination mit andren Verfahren und Einrichtungen zur Lagebestimmung von Lichtwellenleitern (z.B. bei Videoaufnahmeverfahren) vorteilhaft möglich.

Die Erfindung betrifft auch eine Einrichtung zur Durchführung des Verfahrens, bei der eine erste Haltevorrichtung mit einer ersten der beiden Gruppen von Lichtwellenleitern relativ zu einer zweiten Haltevorrichtung mit einer zweiten Gruppe von Lichtwellenleitern mindestens einmal in mindestens eine Richtung parallel zu derjenigen Ebene, in der die Längsachsen der Lichtwellenleiter der zweiten Gruppe liegen, verschiebbar angeordnet ist, bei der eine Sendeeinrichtung an mindestens einen Lichtwellenleiter einer der beiden Gruppen zur Lichteinkopplung während des Verschiebevorgangs angekoppelt ist, bei der an mindestens einen Lichtwellenleiter der anderen Gruppe eine Empfangseinrichtung angekoppelt ist, die den zeitlichen Intensitätsverlauf des Lichts aufnimmt, das während des Verschiebevorgangs aus dem an der Sendeeinrichtung jeweilig angekoppelten Lichtwellenleiter fortlaufend in den an der Empfangseinrichtung jeweilig angekoppelten Lichtwellenleiter eingekoppelt wird, bei der die beiden Halteeinrichtungen mit den beiden Gruppen derart relativ zueinander beweglich sind, daß mit dem während der Verschiebebewegung aufgenommenen Licht eine zeitliche Gruppen-Intensitätsverteilung gewinnbar ist, die den lichtdurchlaufenen Lichtwellenleitern der jeweiligen Gruppe Einzel-Intensitätsverteilungen getrennt zugeordnet und bei der eine Speichereinrichtung vorgesehen ist, die diese Gruppen-Intensitätsverteilung festhält und aus deren Einzel-Intensitätsverteilungen die relative örtliche Lage der lichtdurchlaufenen Lichtwellenleiter in der jeweiligen Gruppe bestimmt und zu Auswertezwecken festhält.

Sonstige Weiterbildungen der Erfindung sind in Unteransprüchen wiedergegeben.

Die Erfindung und ihre Weiterbildungen werden nachfolgend anhand von Zeichnungen näher erläutert.

Es zeigen:

Sonstige Weiterbildungen der Erfindung sind in Unteransprüchen wiedergegeben.

Die Erfindung und ihre Weiterbildungen werden nachfolgend anhand von Zeichnungen näher erläutert.

Es zeigen:

| | |
|---|---|
| Figur 1 | teilweise in perspektivischer Darstellung schematisch den Grundaufbau einer Einrichtung zur Durchführung des erfindungsgemäßen Verfahrens, |
| Figur 2 | Empfangspegel für unterschiedlich ausgerichtete Lichtwellenleiterpaare während ihres Verschweißens bei Durchführung des erfindungsgemäßen Verfahrens nach Figur 1, |
| Figuren 3 und 4 | zwei Gesamt-Intensitätsverteilungen aus dem erfindungsgemäßen Verfahren nach Figur 1, |
| Figur 5 | eine Kreuzkorrelationsfunktion zu den beiden Gesamt-Intensitätsverteilungen nach den Figuren 3 und 4, |
| Figur 6 | eine Luftspalt-Dämpfungskurve in Abhängigkeit von der Luftspaltlänge, |
| Figur 7 | eine zweite Meßeinrichtung zur Durchführung des erfindungsgemäßen Verfahrens, und |
| Figuren 8 mit 10 | Einzelheiten bei der Durchführung des erfindungsgemäßen Verfahrens nach Figur 7 zur Bestimmung optischer Übertragungsgrößen, insbesondere der Spleißdämpfung. |

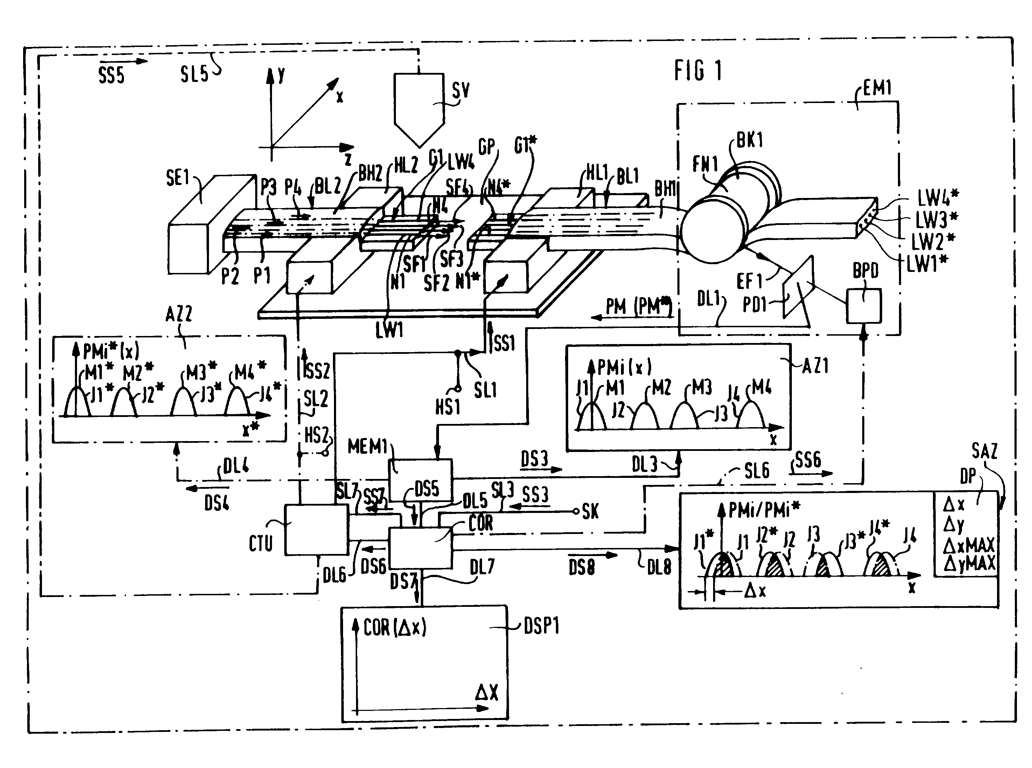

Im rechten Teil von Figur 1 ist eine erste Gruppe G1* mit beispielhaft vier Lichtwellenleitern LW1* bis LW4* und im linken Teil eine zweite Gruppe G1 mit beispielhaft ebenfalls vier Lichtwellenleitern LW1 bis LW4 dargestellt. Diese beiden Gruppen G1* und G1 sollen aufeinander ausgerichtet oder gegebenenfalls miteinander verbunden, insbesondere miteinander verschweißt werden. In der Gruppe G1* bzw. G1 können die Lichtwellenleiter LW1* bis LW4* bzw. LW1 bis LW4 beispielsweise lose, insbesondere unstrukturiert, angeordnet sein, aber auch vorteilhaft miteinander in Form einer Bandleitung durch eine sie fest umschließende Umhüllung mechanisch verbunden sein. In Figur 1 sind die Lichtwellenleiter LW1* bis LW4* in einer etwa rechteckförmigen Bandleitung BL1 ungefähr parallel nebeneinander mechanisch fixiert. Die in einer äußeren Hülle BH1 eingebetteten Lichtwellenleiter LW1* bis LW4* sind endseitig strichpunktiert angedeutet. Die Lichtwellenleiter LW1 bis LW4 der Gruppe G1 sind ebenfalls in einer in etwa rechteckförmigen Bandleitung BL2 ungefähr parallel nebeneinander mechanisch fixiert. Deren äußere Hülle BH2 ist im linken Teil von Figur 1 eingezeichnet.

Um definierte Ausgangsverhältnisse für das Ausrichten der Bandleitungen BL1 und BL2 aufeinander sicherstellen zu können, ist die Bandleitung BL1 in einer Haltevorrichtung HL1, sowie die Bandleitung BL2 in einer Haltevorrichtung HL2 angebracht. Die Haltevorrichtungen HL1 und HL2 sind auf einer gemeinsamen Grundplatte GP angeordnet. Insbesondere sind die beiden, aufeinander auszurichtenden Bandleitungen BL1 und BL2 für einen nachfolgenden Spleißvorgang (z.B. Schweißvorgang) im Bereich ihrer sich gegenüberstehenden Enden jeweils von ihrer äußeren Umhüllung BH1 bzw. BH2 befreit. In diesem Fall kann es zur Lagesicherung der freigelegten Lichtwellenleiter zweckmäßig sein, die frei beweglichen Enden der Lichtwellenleiter LW1* bis LW4* in sich longitudinal erstreckende, V-förmige Führungsnuten N1* bis N4* eines Führungsmittels, z.B. einer etwa rechteckförmigen Platte einzulegen. Ebenso werden die herausgelösten Lichtwellenleiter LW1 - LW4 in etwa V-förmige Führungsnuten N1 bis N4, die sich ungefähr parallel zur Längsachse der Lichtwellenleiter erstrecken, eines Führungsmittels, das ebenfalls als eine etwa rechteckförmige Platte ausgebildet ist, eingebracht. Die Führungsnuten N1* bis N4* bzw. N1 - N4 weisen dabei zweckmäßigerweise eine Querschnittsbreite auf, die in etwa der Breite der einzulegenden Lichtwellenleiter LW1* bis LW4* bzw. LW1 - LW4 entspricht. Die Führungsnuten N1* bis N4* bzw. N1 bis N4 der beiden Führungsmittel weisen zweckmäßigerweise äquidistante Abstände auf, um die annähernd parallel nebeneinander liegenden Lichtwellenleiter LW1* bis LW4* bzw. LW1 bis LW4 jeweils in einen definierten, lagegesicherten Ausgangszustand bringen zu können. Die Führungsmittel sind vorteilhaft auf jeweils der Seite der Haltevorrichtungen HL1 bzw. HL2 angebracht auf der sich die beiden, aufeinander auszurichtenden Gruppen G1* und G1 an ihrer Ausrichtstelle gegenüberstehen.

Um die beiden Gruppen G1* und G1 optimal aufeinander ausrichten zu können, wird jeweils die örtliche Intensitätsverteilung ihrer zugehörigen Lichtwellenleiter LW1* bis LW4* bzw. LW1 bis LW4 innerhalb der Gruppen G1* bzw. G1 mit möglichst hoher Ortsauflösung bestimmt. Aus diesen Intensitätsverteilungen kann die Position größtmöglicher Übereinstimmung, das heißt der Ort maximaler "Verwandtschaft", zwischen den beiden Gruppen G1* und G1 ermittelt werden. Die jeweiligen, örtlichen Positions-Verteilungen der Lichtwellenleiter innerhalb jeder Gruppe werden mittels folgender, zweier unabhängig voneinander auszuführender Meßschritte durchgeführt. Die Reihenfolge der beiden Meßschritte spielt dabei keine Rolle.

Erster Meßschritt

In einem ersten Meßschritt wird die örtliche Intensitätsverteilung der Lichtwellenleiter LW1 bis LW4 in der Gruppe G1 bestimmt und untersucht. Im einzelnen wird dabei so verfahren, daß eine Sendeeinrichtung SE1 an alle Lichtwellenleiter LW1 bis LW4 der Band leitung BL2 angekoppelt wird. Die Sendeeinrichtung SE1 ist im linken Teil von Figur 1 schematisch dargestellt. Diese Sendeeinrichtung SE1 ist dabei so ausgebildet, daß optische Meßsignale P1 bis P4 in die Lichtwellenleiter LW1 bis Lw4 in Richtung auf die Ausrichtstelle eingekoppelt werden und zwar vorteilhaft mittels eines Biegekopplers, wie er auf der rechten Seite der Figur 1 dargestellt und mit BK1 bezeichnet ist. Die Meßsignale P1 bis P4 sind symbolisch durch jeweils einen Pfeil in Figur 1 angedeutet. Für die Ausführungen zu Figur 1 sei angenommen, daß die Meßsignale P1 bis P4 identisch sind, d.h. gleich groß, sind.

Die optischen Meßsignale P1 bis P4 laufen durch die vier Lichtwellenleiter LW1 bis LW4 zur Ausrichtstelle. Dort treten aus den offenen Enden der Lichtwellenleiter LW1 bis LW4 deren zugehörige Strahlungsfelder SF1 - SF4 selektiv aus. Die örtliche Gesamt-Intensitätsverteilungen der Lichtwellenleiter LW1 - LW4 kann nun dadurch gemessen werden, daß mindestens ein Beobachtungs-Lichtwellenleiter in mindestens einer Ebene quer zur Längsachse der Lichtwellenleiter LW1 bis LW4 relativ zu diesen vorbeibewegt wird. In Figur 1 wird als Beobachtungs-Lichtwellenleiter der Lichtwellenleiter LW1* der mit der Bandleitung BL2 zu verspleißenden Bandleitung BL1 gewählt. Dadurch erspart man sich ein zusätzliches Einlegen eines eigens vorzusehenden Beobachtungs-Lihtwellenleiters, so daß konstante, zeitinvariante Meßverhältnisse weitgehend sichergestellt werden können. Selbstverständlich ist es auch möglich, einen definierten Meß-Lichtwellenleiter oder eine Meß-Bandleitung für den Meßvorgang eigens vorzusehen. Während der Relativbewegung des Beobachtungs-Lichtwellenleiters LW1* werden die Strahlungsfelder SF1 bis SF4 sukzessive, zeitlich nacheinander in den Beobachtungs-Lichtwellenleiter LW1* eingekoppelt, die Intensitätsverteilungen der Lichtwellenleiter LW1 bis LW4 aufgenommen und einer Auswertung zugänglich gemacht. Der Beobachtungs-Lichtwellenleiter LW1* wirkt also in der Art einer Aufnahme-Kamera, die entlang der zu untersuchenden Meß-Objekte vorbeibewegt wird. Die Relativbewegung des Meß-Lichtwellenleiters LW1* gegenüber den Lichtwellenleitern LW1 bis LW4 der Gruppe G1 kann auf mehrere Arten erfolgen. Beispielsweise kann die Gruppe G1 in der Haltevorrichtung HL2 feststehend angeordnet sein, während der Beobachtungs-Lichtwellenleiter LW1* mittels der Haltevorrichtung HL1 an der Gruppe G1 vorbeibewegt wird. Umgekehrt kann aber auch der Beobachtungs-Lichtwellenleiter LW1* feststehend angeordnet sein, während die Gruppe G1 mit den Lichtwellenleitern LW1 bis LW4 in der Haltevorrichtung HL2 verschoben wird. Ebenso ist es möglich, die Gruppe G1 mittels der Haltevorrichtung HL2 und gleichzeitig den Beobachtungs-Lichtwellenleiter LW1* mittels der Haltevorrichtung HL1 gegeneinander zu verschieben. Vorteilhaft erfolgt der Verschiebevorgang jeweils mit einer konstanten Relativgeschwindigkeit, so daß der zeitliche Verlauf der Intensitätsverteilung des in den Beobachtungs-Lichtwellenleiter LW1* eingekoppelten Lichtes direkt der örtlichen Intensitätsverteilung der Lichtwellenleiter LW1 bis LW4 in der Gruppe G1 entspricht. Zweckmäßigerweise wird die Verschiebebewegung des Beobachtungs-Lichtwellenleiters LW1* in einer ersten Richtung x parallel zu derjenigen Ebene mindestens einmal durchgeführt, in der die Achsen der Lichtwellenleiter LW1 bis LW4 liegen. Anschließend kann eine zweite Verschiebebewegung in Richtung von $\gamma$ senkrecht zur ersten Betrachtungsebene x mindestens einmal vorgenommen werden.

Der zeitliche Verlauf der Intensitätsverteilung des eingekoppelten Lichtes der Strahlungsfelder SF1 bis SF4 in den Beobachtungs-Lichtwellenleiter LW1* kann mit einer strichpunktiert eingerahmten Empfangseinrichtung EM1 aufgenommen werden. Diese ist im rechten Teil von Figur 1 schematisch dargestellt. Die Empfangseinrichtung EM1 weist einen Biegekoppler BK1 auf, dessen Führungsnut FN1 vorteilhaft so breit ausgebildet ist, daß die Bandleitung BL1 im Biegekoppler BK1 gegen Verschiebung gesichert gehalten ist. Der zeitliche Verlauf der Intensitätsverteilung im Meß-Lichtwellenleiter LW1* kann zum Beispiel vorteilhaft mit Hilfe einer Photodiode PD1 gemessen werden. Zu diesem Zweck wird die Photodiode PD1 im Empfangsbereich des Biegekopplers BK1 so angeordnet und ausgerichtet, daß ihre Empfangscharakteristik in etwa das Empfangsstrahlungsfeld EF1, das entlang der Krümmung des Lichtwellenleiters LW1* austritt, möglichst vollständig erfaßt. Die Photodiode PD1 wandelt die Lichtenergie des ausgekoppelten Empfangsstrahlungsfeldes EF1, das heißt den zeitlichen Verlauf der im Lichtwellenleiter LW1* geführten Intensitätsverteilung in ein elektrisches Meßsignal PM um. Dieses Meßsignal PM wird über eine Leitung DL1 einem Meßwertspeicher MEM1 zugeführt und in diesem festgehalten bzw. abgespeichert.

Zweiter Meßschritt

Die örtliche Intensitätsverteilung der Lichtwellenleiter LW1* bis LW4* der Gruppe G1* in der Bandleitung BL1 wird hierbei analog zur Vorgehensweise des ersten Meßschrittes gewonnen. Dazu wird der Sender SE1 an alle Lichtwellenleiter LW1* bis LW4* der Bandleitung BL1 im rechten Teil von Figur 1 angekoppelt, wobei die vorzugsweise identischen Meßsignale P1* bis P4* in Richtung auf die Ausrichtstelle in die vier zu vermessenden Lichtwellenleiter LW1* bis LW4* selektiv eingespeist werden. Der Empfänger EM1 wird hingegen an die Bandleitung BL2 im linken Teil von Figur 1 angekoppelt. Das zweite Meßverfahren wird also bezüglich der Sendeeinrichtung SE1 und der Empfangseinrichtung EM1 spiegelbildlich zu der in Figur 1 dargestellten Anordnung durchgeführt, d.h. Sende- und Empfangsseite sind vertauscht. Als Beobachtungs-Lichtwellenleiter wird ein Lichtwellenleiter der Gruppe G1 herangezogen, zum Beispiel der Lichtwellenleiter LW1. Analog zum ersten Meßschritt wird vorteilhaft zur Aufnahme der örtlichen Intensitätsverteilung der Lichtwellenleiter LW1* bis LW4* ein Verschiebevorgang (Scanning) quer zur Längsachse der Bandleitung BL1, d.h. in x-Richtung und/oder y-Richtung mindestens einmal durchgeführt. Der zeitliche Verlauf der örtlichen Intensitätsverteilung der aus den Lichtwellenleitern LW1* bis LW4* ausgekoppelten Strahlungsfelder in den sich relativ zu ihnen vorbeibewegenden Beobachtungs-Lichtwellenleiter LW1 kann dann analog zum ersten Meßschritt mit Hilfe der jetzt an die Bandleitung BL2 angekoppelten Photodiode PD1 aufgenommen werden. Diese ist dann im Empfangsbereich ihres Biegekopplers BK1 so positioniert, daß ihre Empfangscharakteristik auf das Empfangsstrahlungsfeld des Lichtwellenleiters LW1 ausgerichtet ist und dieses in etwa vollständig erfaßt. Das in den Lichtwellenleiter LW1 eingekoppelte Licht wird in der Fotodiode PD1 in ein elektrisches Meßsignal PM* umgesetzt und über die Leitung DL1 ebenfalls im Meßwertspeicher MEM1 abgelegt.

Zweckmäßigerweise kann zur Bestimmung eines optimalen Ausrichtzustandes zwischen den beiden Gruppen G1* und G1 mehr als ein Verschiebevorgang für jede Verschieberichtung durchgeführt werden. So kann beispielsweise die Gruppe G1* relativ zum Beobachtungs-Lichtwellenleiter LW1 in x- und/oder in y-Richtung mehrfach durchgefahren werden, d.h. ein Verschiebevorgang kann auch mehr als einmal in die gleiche Verschieberichtung vorgenommen werden. Die so ermittelten Intensitätsverteilungen können vorteilhaft zwecks größerer Meßgenauigkeit gemittelt werden und dann erst zu Auswertezwecken herangezogen werden. Für diesen Einsatzfall ist der Meßwertspeicher MEM1 zweckmäßigerweise so ausgebildet, daß er eine Vielzahl von Intensitätsverteilungen PM bzw. PM* der Gruppen G1 bzw. G1* festhalten bzw. abspeichern kann.

Zu Auswertezwecken werden vorteilhaft die örtlichen Gesamt-Intensitätsverteilungen für die Lichtwellenleiter der Gruppen G1 und G1* jeweils visuell für die beiden Meßschritte dargestellt. Die örtliche Intensitätsverteilung der Lichtwellenleiter LW1 bis LW4 der Gruppe G1 aus dem ersten Meßschritt wird dazu aus dem Meßwertspeicher MEM1 abgerufen und sukzessive über eine Leitung DL3 mittels eines Signals DS3 an eine Anzeigevorrichtung AZ1 übermittelt, die im rechten Teil von Figur 1 dargestellt ist. In der Anzeigevorrichtung AZ1 ist beispielhaft eine Gesamt-Intensitätsverteilung bzw. Einhüllende PMi (x) mit i = 1 bis 4 aufgezeichnet, die zum Beispiel während eines Verschiebevorganges (Scans) entlang der x-Achse aufgenommen wird. Die Momentaufnahme in der Anzeigevorrichtung AZ1 zeigt vier getrennte Einzel-Intensitätsverteilungen bzw. Einhüllende J1 bis J4, die den vier Lichtwellenleitern LW1 bis LW4 zugeordnet sind. Deren Maxima M1 bis M4 kennzeichnen jeweils den Ort maximaler Lichtführung in den Lichtwellenleitern LW1 bis LW4 also insbesondere jeweils die Position des Kerns der Lichtwellenleiter LW1 bis LW4. Durch diese Maxima M1 bis M4 ist somit die exakte Position der Kerne der Lichtwellenleiter LW1 bis LW4 innerhalb der Bandleitung BL2 bestimmt und direkt ablesbar. Bei Monomode-Lichtwellenleitern sind die Intensitätsverteilungen J1 bis J4 wesentlich schmaler und steiler ausgeprägt (Größenordnung 10 μm). Der Abstand zweier Einzel-Intensitätsverteilungen beträgt ungefähr 260 um. Aus der Darstellung in der Anzeigeeinrichtung AZ1 ist ersichtlich, daß der Kern des Lichtwellenleiters LW3 in Richtung auf den Lichtwellenleiter LW1 etwas verschoben ist, d.h. daß hier keine äquidistante Kernverteilung innerhalb der Bandleitung BL2 vorliegt.

Analog zur Anzeigevorrichtung AZ1 wird der Verlauf der örtlichen Intensitätsverteilung der Lichtwellenleiter LW1* bis LW4* innerhalb der Bandleitung BL1 aus dem zweiten Meßschritt fortlaufend in einer Anzeigevorrichtung AZ2, die strichpunktiert in der linken Hälfte von Figur 1 angedeutet ist, visuell dargestellt. Dazu werden jeweils die im Meßwertspeicher MEM1 aufgezeichneten Meßdaten für die örtliche Intensitätsverteilung der Lichtwellenleiter LW1* bis LW4*, aus diesem Meßwertspeicher MEM1 abgerufen und über eine Leitung DL4 mittels eines Signals DS4 an die Anzeigevorrichtung AZ2 sukzessive weitergeleitet. Die Anzeigevorrichtung AZ2 von Figur 1 zeigt beispielhaft eine örtliche Gesamt-Intensitätsverteilung bzw. Einhüllende PMi* mit i = 1 - 4 für die Lichtwellenleiter LW1* - LW4* unter der Annahme eines Scans mit dem Beobachtungs-Lichtwellenleiter LW1 entlang der Ortskoordinaten x. Die Momentaufnahme in der Anzeigevorrichtung AZ2 zeigt vier getrennte Intensitätsverteilungen bzw. Einhüllende J1* bis J4* mit jeweils vier Maxima M1* bis M4*, die den Kernen der vier Lichtwellenleitern LW1* bis LW4* der Gruppe G1* zugeordnet sind. Die Maxima M1* bis M4* kennzeichnen dabei die Orte bzw. die Positionen, an denen jeweils die maximale Lichtenergie in den Lichtwellenleitern LW1* bis LW4* geführt wird, d.h. sie repräsentieren jeweils die Lage der lichtleitenden Kerne in der Bandleitung BL1.

Um die beiden Bandleitungen BL1 und BL2 optimal aufeinander ausrichten zu können, kann es bereits ausreichend sein, daß eine Bedienperson jeweils die örtliche Intensitätsverteilung PMi (x) der Gruppe G1 mit der örtlichen Intensitätsverteilung PMi* (x) der Gruppe G1* direkt visuell vergleicht und daraus eine optimale Ausrichtposition für die Band leitungen BL1 und BL2 gegeneinander abschätzt. Um die beiden Bandleitungen BL1 und BL2 in die so ermittelte, optimale Ausrichtposition zu bringen, ist für die Bedienperson eine manuelle Betätigungsvorrichtung HS1 vorgesehen, mit deren Hilfe ein Steuersignal SS1 zum Bedienen der Haltevorrichtung HL1 über eine Steuerleitung SL1 aktiviert werden kann. Genauso ist es für die Bedienperson möglich, die Haltevorrichtung HL2 mittels einer Betätigungsvorrichtung HS2 durch ein Steuersignal SS2 über eine strichpunktiert eingezeichnete Steuerleitung SL2 zu verschieben.

Das Auffinden und Anfahren eines optimalen Ausrichtzustandes kann auch vorteilhaft durch eine Auswertung in einer Recheneinheit COR automatisiert werden. Die Bedienperson kann die beiden korrespondierenden Meßaufnahmen für die örtlichen Intensitätsverteilungen PMi und PMi* mit Hilfe einer Handsteuerung SK mit Hilfe der Recheneinheit COR zum Vergleich übereinanderschieben und so den Ort maximaler Überlappung der Einzel-Intensitäten bzw. Einhüllenden J1 bis J4 der Gruppe G1 mit den Einzel-Intensitäten bzw. Einhüllenden J1* bis J4* der Gruppe G1* auffinden. Dazu löst die Bedienperson mit der Handsteuerung SK ein Steuersignal SS3 aus. Dieses weist die Recheneinheit COR über eine Steuerleitung SL3 an, jeweils zwei korrespondierende Gesamt-Meßaufnahmen der örtlichen Intensitätsverteilungen PMi und PMi* mit i = 1 bis 4 mittels eines Signals DS5 über eine Leitung DL5 aus dem Meßwertspeicher MEM1 auszulesen und überlappend zu verschieben. Um den Manipulations- bzw. Verschiebevorgang mit der Handsteuerung SK kontrollieren und beobachten zu können, sendet die Recheneinheit COR die Meßaufnahmen PMi und PMi* mittels eines Signals DS8 über eine Leitung DL8 an eine gemeinsame Anzeigevorrichtung SAZ. Diese stellt die örtlichen Intensitätsverteilungen PMi und PMi* getrennt dar z.B. mit unterschiedlichen Grauwerten oder unterschiedlichen Farben. Zweckmäßig kann es auch sein, die Überlappungsbereiche zwischen den beiden korrespondierenden Intensitätsverteilungen der Gruppen G1 und G1* besonders zu kennzeichnen, zum Beispiel durch ein besonderes Einfärben. In Figur 1 sind in der Anzeigevorrichtung SAZ beispielhaft die beiden korrespondierende, um $\Delta x$ gegenein-ander verschobenen Intensitätsverteilungen, bzw. Einhüllenden aus den Anzeigeeinrichtungen AZ1 und AZ2 gleichzeitig überlappend aufgezeichnet. Die Intensitätsverteilung PMi(x) für die Gruppe G1 ist strichpunktiert, die Intensitätsverteilung PMi*(x) für die Gruppe G1* hingegen mit durchgezogenen Linien dargestellt. Der gemeinsame Überlappungsbereich ist jeweils schraffiert gekennzeichnet. Die gemeinsame Anzeige der beiden möglichst optimal zur Dek-kung zu bringenden Intensitätsverteilungen bzw. Einhüllenden, d.h. der Überlappungsbereich, erfolgt in der Anzeigevorrichtung SAZ zweckmäßigerweise in Echtzeit zur Verschiebe-Manipulation am Steuerknopf SK durch die Bedienperson. Die Recheneinheit COR berechnet fortlaufend die entsprechenden Verschiebekoordinaten, beispielsweise die Verschiebekoordinate $\Delta x$ der Gruppen G1 und G1* gegeneinander und übermittelt diese an ein Display DP, das in der oberen, rechten Ecke der Anzeigevorrichtung SAZ fortlaufend die Verschiebekoordinate $\Delta x$ (und bei einer zweiten Verschieberichtung z.B. $\Delta y$) anzeigt. Die Recheneinheit COR registriert nun während des Verschiebevorganges den Ort mit maximaler Überlappungs-Gesamtfläche zwischen den beiden örtlichen Intensitätsverteilungen PMi(x) und PMi* (x), hält diesen Ort maximaler Verwandtschaft fest und zeigt die zugehörigen Verschiebekoordinaten beispielsweise $\Delta xMAX$, $\Delta yMAX$, in der Anzeigevorrichtung SAZ im Display DP an. Der Ort maximaler Verwandtschaft kann dann beispielsweise durch die Bedienperson manuell über die Betätigungsvorrichtung HS1 bzw. HS2 angefahren werden.

Eine automatische Ausrichtung der Band leitungen BL1 und BL2 aufeinander ist vorteilhaft möglich, indem die Ortskoordinaten $\Delta xMAX$ und/oder $\Delta yMAX$ für den Ort maximaler "Verwandtschaft" von der Recheneinheit COR über eine Leitung DL6 mittels eines Signals DS6 an ein Steuer- und Regelgerät CTU weitergeleitet werden. Dieses betätigt mindestens eine der Haltevorrichtungen HL1 bzw. HL2 über zugeordnete Steuerleitungen SL1 bzw. SL2. In Figur 1 kann das Steuer- und Regelgerät CTU beispielsweise die Haltevorrichtung HL1 über das Steuersignal SS1 aktivieren.

Entsprechend dazu, wie in Figur 1 strichpunktiert angedeutet ist, kann die Haltevorrichtung HL2 über das Steuersignal SS2, das über eine Steuerleitung SL2 zur Haltevorrichtung HL2 gesendet wird, bedient werden.

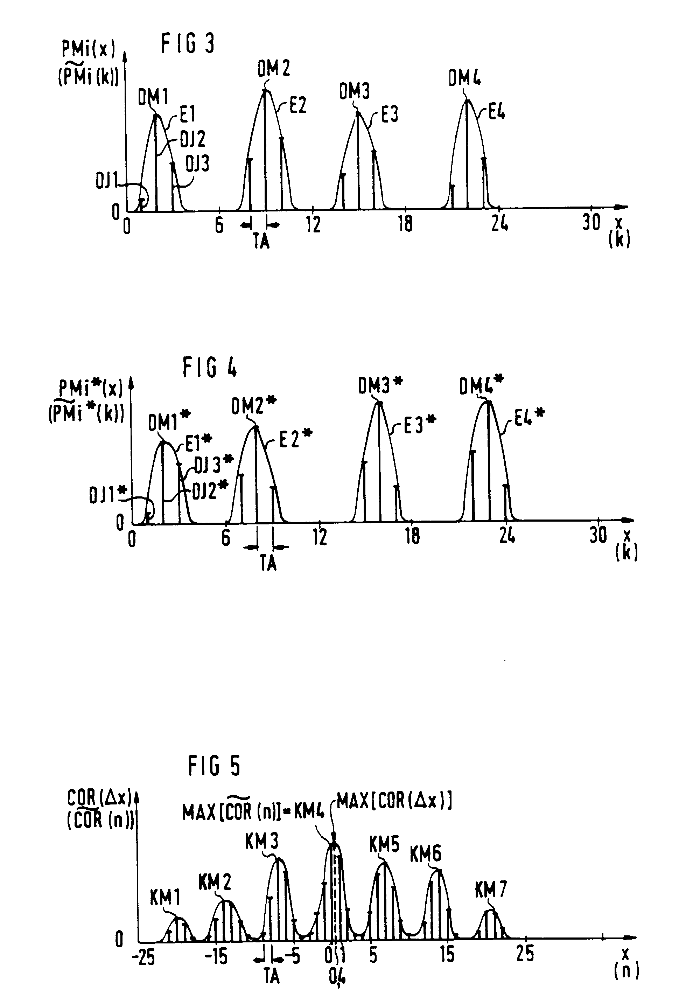

Eine vollständig automatische Bestimmung des Ortes maximaler Verwandtschaft kann in der Recheneinheit COR durch Berechnung der jeweiligen Gesamt-Korrelationsfunktion, z.B. COR($\Delta$x), für jede Verschieberichtung, z.B. x-Richtung zwischen der Gesamt-Intensitätsverteilung PMi der Gruppe G1 und der Gesamt-Intensitätsverteilung PMi* der Gruppe G1* bestimmt werden. Diese Korrelationsfunktion, z.B. COR($\Delta$ x), wird über eine Leitung DL7 mittels Signals DS7 an eine Anzeigevorrichtung DSP1 übermittelt und dort über dem jeweiligen Verschiebeweg (z.B. $\Delta$ x, $\Delta$ y) angezeigt. Nähere Einzeleinheiten hierzu werden an Hand der Figuren 3 bis 6 erläutert.

Die in Figur 1 dargestellten Komponenten können zweckmäßigerweise zu einem Meßgerät, zum Beispiel in Form eines Meßkoffers, zusammengefaßt sein oder zum Beispiel auch Bestandteil eines Lichtwellenleiter-Spleißgerätes oder eines Dämpfungsmeßgerätes sein. Neben diesen beiden besonders vorteilhaften Anwendungsgebieten der Erfindung besteht auch die Möglichkeit, weitere optische Übertragungskenngrößen zweier sich gegenüberstehender Gruppen von Lichtwellenleitern zu vermessen.

Sind nun die beiden Band leitungen BL1 und BL2 am Ort ihrer maximalen Übereinstimmung optimal aufeinander ausgerichtet, so können dort die Lichtwellenleiter LW1* bis LW4* der Gruppe G1* mit ihren korrespondierenden Lichtwellenleitern LW1 bis LW4 der Gruppe G1 (z.B. mit Hilfe einer Schweißvorrichtung SV) verbunden bzw. gekoppelt werden. Dazu werden die beiden Führungsmittel mit Hilfe der Haltevorrichtung HL2 bzw. HL1 einander angenähert, so daß ihr axialer Versatz in z-Richtung verschwindet und die Stirnseiten der Lichtwellenleiter aneinanderstoßen. Die Lichtwellenleiter-Enden stehen wenige mm über die Führungsmittel hinaus, um eine gleichmäßige Hitzeverteilung beim Schweißen zu gewährleisten. Die Schweißeinrichtung SV kann manuell sowie automatisch mit Hilfe der Steuer- und Regeleinheit CTU bedient werden. In Figur 1 aktiviert die Steuer- und Regeleinheit CTU die Schweißeinrichtung SV mittels eines Signals SS5 über eine strichpunktiert angedeutete Steuerleitung SL5.

Aus den beiden zuvor ermittelten Intensitätsverteilungen PMi* und PMi für die Gruppen G1* und G1 können geeignete spezifische Steuerkriterien zur Einstellung der Schweißzeit t in der Recheneinheit COR abgeleitet werden und an die Steuer- und Regeleinrichtung CTU mit Hilfe eines Signals SS7 über die Leitung SL7 übermittelt werden. Vorteilhaft kann zur Bestimmung eines spezifischen Steuerkriteriums die übergekoppelte Lichtleistung bei demjenigen korrespondierenden Lichtwellenleiter-Paar herangezogen werden, das im optimalen Ausrichtzustand den größten, verbleibenden radialen Versatz aufweist, da ein individuelles Ausrichten in der Mehrfaser-Verbindungstechnik meist nicht möglich ist. Dieses am schlechtesten ausgerichtete Lichtwellenleiter-Paar kann zum Beispiel dadurch aufgefunden werden, daß die Recheneinheit COR im optimalen Ausrichtzustand aus den gegeneinander verschobenen Gesamt-Intensitätsverteilungen PMi und PMi* diejenigen beiden korrespondierenden Einzel-Intensitätsverteilungen identifiziert, die eine minimale, individuelle Überlappungsfläche aufweisen. In der Momentaufnahme der beiden um $\Delta$x gegeneinander verschobenen Gesamt-Intensitätsverteilungen PMi(x) und PMi*(x) der Anzeigevorrichtung SAZ zeigen die beiden korrespondierenden Einzel-Intensitätsverteilungen J3 und J3* die kleinste Überlappungsfläche unter den beiden gegeneinander verschobenen Einzel-Intensitätsverteilungen J1 - J4 der Gruppe G1 und J1* - J4* der Gruppe G1*. In diesem Ausrichtzustand sind die Kerne des Lichtwellenleiter-Paares LW3/LW3* am schlechtesten ausgerichtet. Um das übergekoppelte Licht in diesem Lichtwellenleiter-Paar messen zu können, wird empfangsseitig die Photodiode PD1 des Empfängers EM1 auf das Empfangs feld des Lichtwellenleiters LW3* ausgerichtet. Zweckmäßigerweise kann dies automatisch mit Hilfe der Recheneinheit COR ausgeführt werden, die ein Steuersignal SS6 über eine strichpunktiert eingezeichnete Steuerleitung SL6 an ein Stellglied BPD für die Photodiode PD1 überträgt. Das aus dem Lichtwellenleiter LW3 der Gruppe G1 in den Lichtwellenleiter LW3* der Gruppe G1* eingekoppelte Licht wird dann fortlaufend mit Hilfe der Photodiode PD1 gemessen, in das elektrische Meßsignal PM umgewandelt und über die Leitung DL1 an den Meßwertspeicher MEM1 übermittelt. Von dort wird das Meßsignal PM schließlich mittels des Signals DS5 über die Leitung DL5 an die Recheneinheit COR übermittelt. Dieses Empfangssignal kann vorteilhaft als spezifisches Steuerkriterium für die Schweißzeit t während des Verschweißens der beiden Gruppen G1 und G1* verwendet werden. Der Grund dafür ist, daß mit Hilfe dieser Maßnahme auf jeden Fall ein optimales Spleißergebnis für das am schlechtesten ausgerichtete und damit hinsichtlich des Spleißvorganges kritischste Lichtwellenleiter-Paar sichergestellt werden kann.

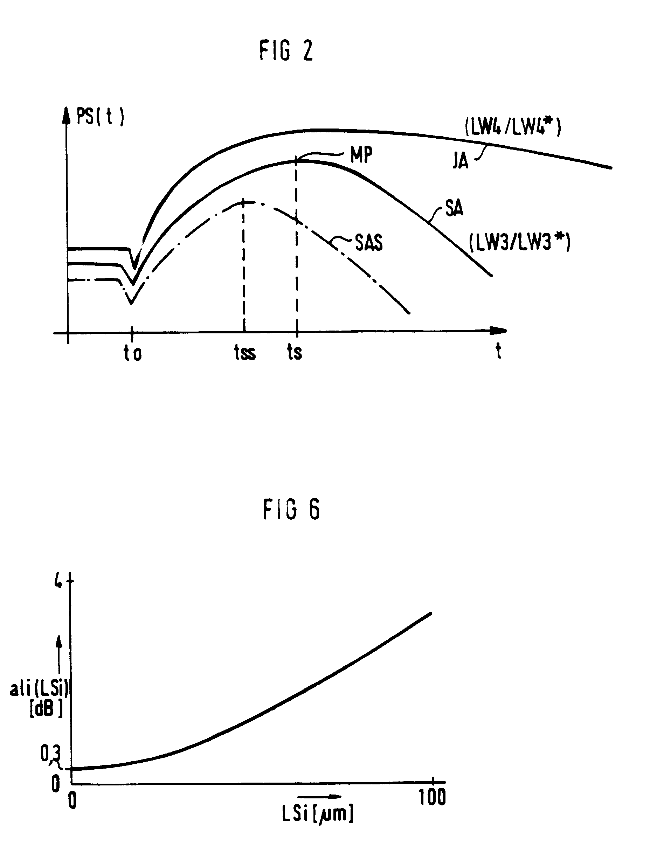

Figur 2 zeigt zwei Empfangspegel des jeweils an der Ausrichtstelle übergekoppelten Lichtes PS (t) in Abhängigkeit von der Schweißzeit t für das korrespondierende Lichtwellenleiterpaar LW3/LW3* sowie LW4/LW4*. Für ein nahezu ideal fluchtend ausgerichtetes Lichtwellenleiter-Paar wie LW4/LW4* ergibt sich die Meßkurve JA, für ein relativ schlecht ausgerichtetes Lichtwellenleiter-Paar wie LW3/LW3* die Meßkurve SA. Bei dem nahezu ideal fluchtend ausgerichteten Lichtwellenleiter-Paar LW4/LW4* ergibt sich ein relativ flacher Kurvenverlauf ab Beginn des Schweißvorganges zum Zeitpunkt t0 über eine relativ lange Schweißdauer. Bei dem relativ schlecht ausgerichteten Lichtwellenleiter-Paar LW3/LW3* weist hingegen die Meßkurve SA ab dem Schweißzeitpunkt t0 ein Ansteigen des Meßpegels PS(t) bis zu einem Zeitpunkt ts auf. Nach diesem Zeitpunkt ts nimmt der Empfangspegel PS(t) hingegen wiederum ab, das heißt die Dämpfung an der Ausrichtstelle bzw. Schweißstelle nimmt wieder zu. Es gibt somit bei dem schlecht ausgerichteten Lichtwellenleiter-Paar LW3/LW3* einen optimalen Zeitpunkt ts bzw. Zeitbereich nach Starten des Schweißvorganges zum Zeitpunkt t0, zu dem der Schweißvorgang möglichst abgebrochen werden sollte, da dort ein Maximum MP für den Empfangspegel PS(t), das heißt eine minimale Dämpfung vorliegt. Wird der Schweißvorgang etwa zum Zeitpunkt ts beendet, so kann vorteilhaft erreicht werden, daß der verbleibende radiale Versatz im optimalen Ausrichtzustand der Gruppen G1 und G1* für das am schlechtesten ausgerichtete Lichtwellenleiter-Paar LW3/LW3* infolge der Oberflächenspannung des geschmolzenen Glases verschwindet. Dabei bleibt die Dämpfung nach Beenden des Schweißvorganges weitgehend minimal. Auf diese Weise stellt man vorteilhaft sicher, daß auch für das am schlechtesten ausgerichtete Lichtwellenleiter-Paar LW3/LW3* im optimalen Ausrichtzustand der beiden Gruppen G1 und G1* das bestmögliche Schweißergebnis erhalten wird. Für alle übrigen, besser aufeinander ausgerichteten Lichtwellenleiter-Paare, wie z.B. LW4/LW4* ergeben sich wegen des relativ flachen Verlaufs der Meßkurve JA auch bei vorzeitigem Abbruch des Schweißvorganges zum Zeitpunkt ts trotzdem noch sehr gute Spleißergebnisse.

Dieses Verfahren bricht also den Schweißvorgang zu dem Zeitpunkt ts ab, zu dem für das am schlecntesten ausgerichtete Lichtwellenleiter-Paar LW3/LW3* der Versatz durch die Oberflächenspannung des Glases gegen null geht. Dadurch sind gleichzeitig auch gute Spleißergebnisse für alle übrigen Lichtwellenleiterpaare in den Gruppen G1 und G1* garantiert. Unzulässig hohe Kernverbiegungen aufgrund der Oberflächenspannung des geschmolzenen Glases bzw. sonstige Profilschädigungen werden durch den vorzeitigen Abbruch des Schweißvorganges beim Maximum des Empfangspegels für die am schlechtesten ausgerichteten Lichtwellenleiter-Paare weitgehend vermieden.

Allgemein ausgedrückt wird also die Schweißzeit ts-t0 umso kürzer gewählt, je schlechter die Kernausrichtung eines der beteiligten Lichtwellenleiterpaare ist. Wäre, wie strichpunktiert durch die Kurve SAS angedeutet, die Ausrichtung der Lichtwellenleiter-Kombination LW3/LW3* noch schlechter als durch die Kurve SA wiedergegeben, so müßte der Schweißvorgang bereits um den Zeitpunkt tss abgebrochen, d.h. die Schweißzeit ts-to noch kürzer gewählt werden.

In Figur 3 ist beispielhaft eine aus dem erfindungsgemäßen Verfahren nach Figur 1 gewonnene Gesamt-Intensitätsverteilung bzw. Gesamt-Einhüllende PMi(x) für die Lichtwellenleiter LW1 bis LW4 der Bandleitung BL2 für eine Verschiebebewegung in x-Richtung dargestellt. Die Gesamt-Intensitätsverteilung PMi(x) weist für die vier Lichtwellenleiter LW1 bis LW4 vier zugehörige Einzel-Intensitätsverteilungen bzw. Einhüllende E1 bis E4 auf. Jede dieser vier Einhüllender E1 bis E4 umhüllt jeweils drei diskrete Meßwerte, wie sie zum Beispiel mit Hilfe eines Analog/Digital-Umsetzers aus den von der Photodiode PD1 kontinuierlich aufgenommenen Meßsignalen PM in Figur 1 gewonnen werden können. Der kontinuierlichen Gesamt-Einhüllenden PMi(x) über der kontinuierlichen Ortskoordinaten x ist also eine diskrete und quantisierte Gesamt-Einhüllende $\widetilde{PMi}$(k) über der diskreten Ortskkordinaten k mit x = k . TA (TA = Abtastabstand) zugeordnet. Die Einhüllende E1 weist so zum Beispiel die drei quantisierten Intensitäts-Meßwerte DJ1, DJ2 und DJ3 im Abstand TA auf. Die vier Einhüllende E1 bis E4 zeigen jeweils vier Maxima DM1 bis DM4, die jeweils den Ort maximaler Lichtleistung in den Lichtwellenleitern LW1 bis LW4 und damit jeweils das Zentrum des Lichtwellenleiter-Kernes kennzeichnen.

In Figur 4 ist entsprechend Figur 3 für die Lichtwellenleiter LW1* bis LW4* der Bandleitung BL1 beispielhaft eine kontinuierliche Gesamt-Intensitätsverteilung bzw. Gesamt-Einhüllende PMi*(x) über der kontinuierlichen Ortskoordinaten x aufgezeichnet. Dieser ist entsprechend der Figur 3 eine diskrete Gesamt-Intensitätsverteilung $\widetilde{PMi}$*(k) über der diskreten Ortskoordinaten k mit x=k.t zugeordnet. Die Intensitätsverteilung PMi*(x) weist für die vier Lichtwellenleiter LW1* bis LW4* ebenfalls vier zugehörige Einhüllende E1* bis E4* auf, die jeweils drei diskrete Meßwerte im Abtastabstand T umgeben. Beispielsweise hüllt die Einhüllende E1* die quantisierten Meßwerte DJ1*, DJ2* und DJ3* ein. Die Einhüllenden E1* bis E4* kennzeichnen jeweils die Zentren der Kerne der Lichtwellenleiter LW1* bis LW4* durch Maxima DM1* bis DM4*.

Im Vergleich der Gesamt-Intensitätsverteilung PMi*(x) aus Figur 4 zu der Gesamt-Intensitätsverteilung PMi(x) aus Figur 3 erstreckt sich die Einhüllende E1* über den gleichen x-Koordinatenabschnitt wie die Einhüllende E1, das heißt, die Kerne der Lichtwellenleiter LW1* und LW1 sind dort ideal fluchtend aufeinander ausgerichtet. Im Gegensatz dazu ist die Einhülle E2* gegenüber der Einhüllenden E2* etwas nach links verschoben, das heißt der Kern des Lichtwellenleiters LW2* ist gegenüber dem Kern des Lichtwellenleiters LW2 etwas nach links gerückt. Die Einhüllenden E3* und E4* sind hingegen gegenüber den Einhüllenden E3 und E4 etwas nach rechts verschoben, das heißt die Lichtwellenleiter LW3* und LW4* sind gegenüber den Lichtwellenleitern LW3 und LW4 ebenfalls unausgerichtet.

In Figur 5 ist schließlich eine Kreuzkorrelationsfunktion $\widetilde{COR}$ (n) über dem relativen diskreten Verschiebeweg n dargestellt, die man erhält, wenn die diskrete Gesamt-Intensitätsverteilung $\widetilde{PMi}$(k) von Figur 3 mit der diskreten Gesamt-Intensitätsverteilung $\widetilde{PMi}$*(k) von Figur 4 kreuzkorreliert wird. Die Kreuzkorrelationsfunktion $\widetilde{COR}$ (n) der diskreten Gesamt-Intensitätsverteilungen $\widetilde{PMi}$(k) und $\widetilde{PMi}$*(k) ist definiert durch

$$\widetilde{COR}(n) = TA \sum_{k=1}^{N-1} \widetilde{PMi}(k)\ \widetilde{PMi}*(k+n)$$

Die diskrete Kreuzkorrelationsfunktion $\widehat{COR}$ (n) weist sieben Maxima KM1 bis KM7 auf. Das mittlere Maximum KM4 ist innerhalb der diskreten Verteilung von $\widehat{COR}$ (n) das absolut größte Maximum MAX [ $\widehat{COR}$ (n)]= KM4. Das Maximum dieser diskreten kreuzkorrelierten $\widehat{COR}$ (n) kennzeichnet dabei den diskreten Verschiebeweg bzw. Ort, an dem sich alle vier diskreten Einzel-Verteilungen, das heißt also jeweils die drei Abtastwerte in den Einhüllenden E1 bis E4, von $\widehat{PMi}$ (k) mit den vier zugehörigen, diskreten Einzel-Verteilungen, das heißt also jeweils mit den drei Abtastwerten in den Einhüllenden E1* bis E4*, von $\widehat{PMi}$*(k) maximal überlappen. In Figur 5 tritt das absolut größte Maximum MAX [ $\widehat{COR}$ (n)] am Ort n = 0 auf, das heißt, für eine Lageverteilung der Lichtwellenleiter LW1 bis LW4 zu den Lichtwellenleitern LW1* bis LW4*, wie sie in den Figuren 3 und 4 untereinander durch die zugehörigen diskreten Gesamt-Intensitätsverteilungen $\widehat{PMi}$(k) und $\widehat{PMi}$*(k) dargestellt ist, ist bereits der optimale Ausrichtzustand und damit der Ort maximaler Übereinstimmung zwischen den Bandleitungen BL1 und BL2 erreicht. Von praktischem Interesse ist, die diskrete Kreuzkorrelationsfunktion $\widehat{COR}$ (n) durch eine funktionale Abhängigkeit (wie zum Beispiel mit Hilfe einer Polynom-Interpolation oder nach den Abtasttheorem von Shannon) anzunähern, da die Auflösung von der x-Koordinaten durch den Abstand TA zweier Intensitätswerte begrenzt wird. Als Einhüllende für die diskreten Intensitätsmeßwerte der diskreten Kreuzkorrelationsfunktion $\widehat{COR}$ (n) ergibt sich somit eine kontinuierliche Kreuzkorrelationsfunktion $\widehat{COR}$ (∆x) über der Verschiebekoordinaten ∆x mit ∆ x = n TA. Aus der interpolierten, kontinuierlichen Kreuzkorrelationsfunktion $\widehat{COR}$ (∆ x) läßt sich funktional das absolut größte Maximum MAX [ $\widehat{COR}$ (∆ x)] für die Ortskoordinate ∆ x = 0,4 exakt (also mit Zwischenwerten) bestimmen. Um die beiden Bandleitungen BL1 und BL2 also optimal aufeinander auszurichten, wird die Bandleitung BL1 um ∆ x = 0,4 gegenüber der Bandleitung BL2 nach links verschoben oder die Bandleitung BL2 gegenüber der Bandleitung BL2 um ∆x = 0,4 nach rechts.

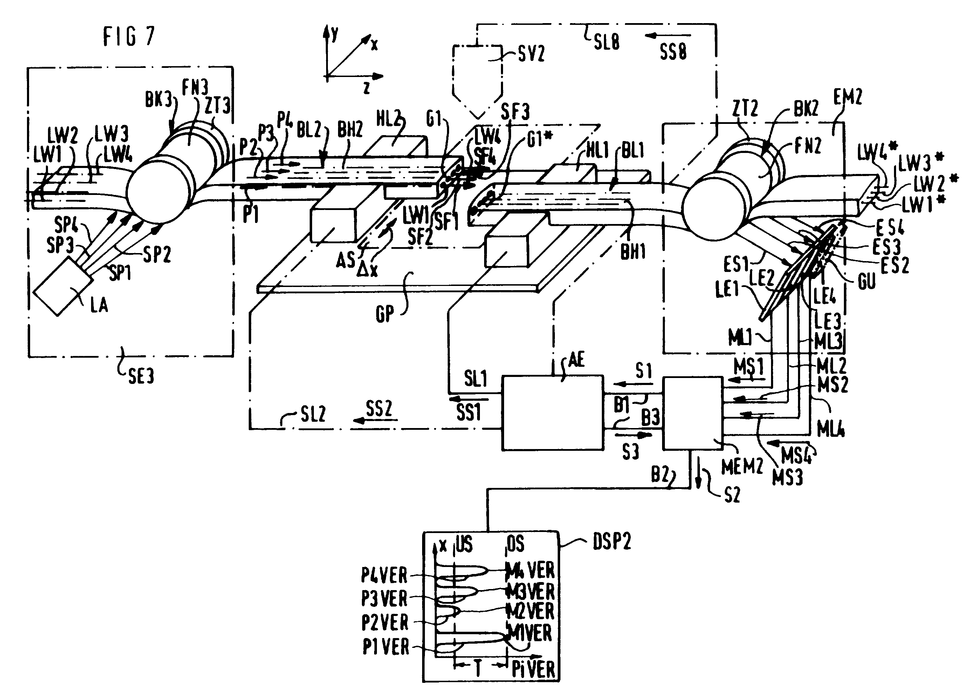

In Figur 7 sind die aus der Figur 1 unverändert übernommenen Elemente mit den gleichen Bezugszeichen wie in Figur 1 versehen. Die Gruppe G1 mit den Lichtwellenleitern LW1 bis LW4 in der Haltevorrichtung HL2 wird im Unterschied zu Figur 1 auch noch im Bereich der Ausrichtstelle, die hier mit AS bezeichnet ist, von der äußeren, etwa rechteckförmigen, flachen Umhüllung BH2 der Bandleitung BL2 eingebettet. Die Haltevorrichtung HL2 ist gegebenenfalls in drei verschiedene Raumrichtungen x, y und z verschiebbar. Entsprechend dazu ist auch die Gruppe G1* mit den Lichtwellenleitern LW1* bis LW4* in der Haltgevorrichtung HL1 im Bereich der Ausrichtstelle noch von der äußeren, etwa rechteckförmigen Umhüllenden BH1 der Bandleitung BL1 umgeben und gegebenenfalls in x, y und z-Richtung beweglich. Die Längsachse der Lichtwellenleiter LW1 - LW4 sowie LW1* - LW4* sind jeweils strichpunktiert in den Bandleitungen BL2 und BL1 angedeutet. Die beiden Haltevorrichtungen HL1 und HL2 sind zur besseren Handhabbarkeit auf einer gemeinsamen, feststehenden Grundplatte GP angebracht.

Die beiden Bandleitungen BL1 und BL2 sollen bezüglich der beiden Gruppen G1* und G1 von Lichtwellenleitern, d.h. gruppenweise, möglichst optimal aufeinander ausgerichtet werden, um dann in diesem optimalen Ausrichtzustand zum Beispiel eine Dämpfungsmessung oder einen Spleißvorgang für jede Lichtwellenleiter-Kombination der beiden Gruppen zuverlässig durchführen zu können. Für die gruppenweise Bestimmung der optimalen Ausrichtposition selbst ist es nicht zwingend erforderlich, die Lichtwellenleiter LW1 bis LW4 aus der äußeren Umhüllung BH2 der Bandleitung BL2 bzw. die Lichtwellenleiter LW1* bis LW4* aus der äußeren Umhüllung BH1 der Bandleitung BL1 herauslösen bzw. freilegen zu müssen.

Im linken Teil von Figur 7 werden zur optimalen Lagebestimmung vier Sendesignale SP1 bis SP4 in die Lichtwellenleiter LW1 bis LW4 der Bandleitung BL2 mit Hilfe einer Sendeeinrichtung SE3 eingekoppelt. Dazu werden die Lichtwellenleiter LW1 - LW4 der Bandleitung BL2 um einen Zylinder ZT3 des Biegekopplers BK3 herumgelegt und in dessen Führungsnut FN3 gekrümmt geführt, so daß die Sendesignale SP1 bis SP4 nahezu tangential in die Lichtwellenleiter LW1 bis LW4 eintreten können. Die Sendesignale SP1 bis SP4 sind symbolisch durch jeweils einen Pfeil angedeutet. Die Sendeeinrichtung SE3 weist wie in Figur 7 dargestellt, entweder nur eine einzige Lichtquelle LA, wie z.B. eine Laserdiode, an die alle zu messenden Lichtwellenleiter LW1 bis LW4 gemeinsam angekoppelt sind, oder für jeden anzukoppelnden Lichtwellenleiter LW1 bis LW4 eine eigene Lichtquelle auf. Alternativ zum Biegekopplerprinzip können die Sendesignale SP1 bis SP4 auch direkt über die offenen Stirnseiten der Lichtwellenleiter LW1 bis LW4 eingespeist werden. Sie können vorteilhaft wie in Figur 7 aus einem eigens vorgesehenen Meßsender, wie z.B. der Lichtquelle LA stammen, aber auch Nachrichtensignale in den Lichtwellenleitern LW1 bis LW4 sein.

Für die folgenden Ausführungen in Figur 7 sei zur Vereinfachung angenommen, daß die in die Lichtwellenleiter LW1-LW4 eingekoppelten Sendesignale SP1-SP4 identisch, h.h. gleich groß sind. Weiterhin gelten vereinfacht bei der sendeseitigen Einkopplung und bei der empfangsseitigen Auskopplung jeweils für alle vier Lichtwellenleiter-Kombinationen LW1/LW1* bis LW4/LW4* gleiche Koppelfaktoren.

Die vier Meßsignale P1 bis P4 werden in den Lichtwellenleitern LW1 bis LW4 bis zur Ausrichtstelle AS, die in Figur 7 strichpunktiert angedeutet ist, geführt. Dort treten dann deren zugehörige vier Strahlungsfelder SF1 bis SF4 selektiv voneinander aus.

Der Bandleitung BL2 mit den Lichtwellenleitern LW1 bis LW4 steht die Bandleitung BL1 mit den Lichtwellenleitern LW1* bis LW4* zunächst in irgendeiner, unausgerichteten Position gegenüber. Die beiden Bandleitungen BL1 und BL2 werden nun relativ zueinander so bewegt, daß die aus den Lichtwellenleitern LW1 bis LW4 ausgekoppelten Strahlungsfelder SF1 bis SF4 in die Lichtwellenleiter LW1* bis LW4* in verschiedenen Positionen bzw. Lagen der beiden Bandleitungen BL1 und BL2 zueinander eingekoppelt werden. Zu diesem Zweck wird beispielsweise die Bandleitung BL1 in der Haltevorrichtung HL1 gegenüber der feststehenden Bandleitung BL2 in der Haltevorrichtung HL2 in mindestens einer Richtung parallel zu derjenigen Ebene, in der die Längsachsen der Lichtwellenleiter LW1-LW4 liegen, vorzugsweise in x- und/ oder y-Richtung mindestens einmal verschoben. Durch diese Verschiebebewegung werden die aus den Lichtwellenleitern LW1 bis LW4 ausgekoppelten Strahlungsfelder SF1-SF4 jeweils von den zugeordneten, korrespondierenden Lichtwellenleitern LW1* bis LW4* in verschiedenen Raumpositionen erfaßt. In Figur 7 nimmt also beispielsweise der Lichtwellenleiter LW1* das Strahlenfeld SF1 des aus dem Lichtwellenleiter LW1 ausgekoppelten Meßsignals P1 während eines Verschiebevorgangs in x-Richtung sukzessive, d.h. fortlaufend, an verschiedenen x-Positionen auf. Genauso wird bei einer Verschiebung in y-Richtung oder bei einer Verschiebung in einer anderen Raumrichtung quer, d.h. orthogonal, zur Längsachse der Bandleitung BL2 verfahren. Bei der Einkopplung der Strahlungsfelder SF1 bis SF4 in die Lichtwellenleiter LW1* bis LW4* wirken sich deren Empfangscharakteristika, sowie deren spezifische Lichtführungs-Eigenschaften in ihren Kernen auf den zeitlichen Verlauf der Gesamt-Intensitätsverteilung bzw. -Empfangspegels des jeweils aus den Lichtwellenleitern LW1 bis LW4 in die Lichtwellenleiter LW1* - LW4* übergekoppelten Lichtes aus. Mit anderen Worten heißt das, daß die in die Lichtwellenleitern LW1* bis LW4* übergekoppelten Meßsignale dann sowohl von den Positions- bzw. Lageverhältnissen, d.h. von den charakteristischen Auskoppelverhältnissen, der Kerne der Lichtwellenleiter LW1 bis LW4 der Gruppe G1 abhängen sowie gleichzeitig von den Lage- bzw. Positionsverhältnissen, d.h. von den Einkoppelverhältnissen bzw. den Empfangscharakteristika, der Kerne der Lichtwellenleiter LW1* bis LW4* im Bereich der Ausrichtstelle AS.

Zweckmäßigerweise wird der Verschiebevorgang der Bandleitung BL1 von einer Position aus gestartet, bei der für jedes Lichtwellenleiterpaar, wie z.B. LW1/LW1*, jeweils noch ein Maximum für deren Einzel-Intensitätsverteilung überschritten werden kann. Dies kann beispielsweise in einfacher Weise dadurch erreicht werden, daß die Bandleitung BL1 ganz aus der Ausrichtstelle AS herausgefahren wird und von dort aus der Verschiebevorgang gestartet wird. Die einfache Relativbewegung der beiden Gruppen G1 und G1* von Lichtwellenleitern gegeneinander wird zweckmäßigerweise um etwa mindestens den maximal auftretenden Versatz zweier korrespondierender Lichtwellenleiter in den Gruppen G1 und G1* in die jeweilige Verschieberichtung durchgeführt.

Zweckmäßig kann es aber auch sein, die beiden Bandleitungen BL1 und BL2 nur geringfügig gegeneinander zu verschieben, das heißt, eine Art Zitterbewegung ("Jitter") durchzuführen, so daß jeweils links und rechts vom jeweiligen Einzel-Intensitätsmaximum (bzw. vom Maximum des Empfangspegels), d.h. links und rechts vom der Hauptabstrahlungsrichtung der Strahlungsfelder SF1 bis SF4, ebenfalls noch Lichtanteile der Strahlungsfelder SF1-SF4 in die Lichtwellenleiter LW1* bis LW4* übergekoppelt werden. Die Jitter-Bewegung für die Bandleitung BL1 erfolgt z.B. in x-Richtung in der Weise, daß sie zunächst um ein kleines Stück $\Delta$ x in positiver x-Richtung bewegt wird und dann eine Richtungsumkehr um $\Delta$ x in negativer x-Richtung erfährt. Diese Hin- und Herbewegung kann vorteilhaft mehrmals ausgeführt werden. Durch Überlagerung bzw. Mittelwertbildung der Meßaufnahmen kann vorteilhaft erreicht werden, daß Störgrößen, wie zum Beispiel mechanisches Spiel der Haltevorrichtungen, Hysterese sowie Kriechen deren Piezo-Elemente weitgehend eliminiert werden können. Die "Jitter"-Bewegung bietet den Vorteil, daß nur relativ kleine Verschiebebewegungen der Bandleitungen BL1 und BL2 gegeneinander erforderlich sind, um bereits Aussagen und Rückschlüsse über deren optimalen Ausrichtzustand relativ zueinander ziehen zu können. Bei der "Jitter"-Bewegung ist eine Verschiebung um mindestens die jeweilige Strahlungsfeldbreite jeweils zweier korrespondierender Lichtwellenleiter aus ihrem jeweils ideal fluchtenden Ausrichtzustand heraus erforderlich (in etwa 10 µm). Dadurch können relativ schnell Informationen aus verschiedenen Raumrichtungen über die relative Lage der Kerne der Lichtwellenleiter LW1 bis LW4 in der Bandleitung BL2 zu den Kernen der Lichtwellenleiter LW1* bis LW4* in der Bandleitung BL1 gewonnen werden. Die "Jitter"-Methode stellt somit in einfacher Weise sicher, daß auf jeden Fall das Transmissionsmaximum jeweils zweier korrespondierender Lichtwellenleiter, wie z.B. für LW1/LW1*, erfaßt werden kann.

Der zeitliche Verlauf der Intensitätsverteilung der Lichtwellenleiter LW1* bis LW4* wird kontinuierlich, d.h. fortlaufend, mit Hilfe einer Empfangseinrichtung EM2 aufgenommen. Diese Empfangseinrichtung EM2 weist vorteilhaft einen Biegekoppler BK2 mit einem Zylinder ZT2 auf, in dessen Führungsnut FN2 die Bandleitung BL1 eingelegt ist. Mit Hilfe von mindestens vier lichtempfindlichen Elementen LE1 bis LE4, die auf einer strichpunktiert nur ausschnittsweise eingezeichneten, gemeinsamen Grundplatte GU angeordnet sind, werden vier Empfangs-Strahlungsfelder ES1 bis ES4, die entlang der Krümmung der Lichtwellenleiter LW1* bis LW4* ausgekoppelt werden, selektiv erfaßt. Die lichtempfindlichen Elemente können vorzugsweise in Form einer Mehrquadranten-Diode eines Mehrquadranten-Arrays oder CCD-Arrays, das üblicherweise weit über 100 lichtempfindliche Elemente (z.B. 1024 x 1024 Elemente für Videonorm) aufweist, zusammengefaßt sein. Die lichtempfindlichen Elemente LE1 bis LE4 erzeugen aus den Strahlungsfeldern ES1 bis ES4 elektrische Meßsignale MS1 bis MS4 und führen diese über getrennte Meßleitungen ML1 bis ML4 einem Meßwertspeicher MEM2 zu. Dieser hält den zeitlichen Verlauf des aus den Lichtwellenleitern LW1* bis LW4* ausgekoppelten Lichtes jeweils selektiv fest.

Eine Auswerteeinrichtung AE durchsucht nun die kontinuierlich über die Leitung B1 vom Meßwertspeicher MEM2 einlaufenden Signale S1 (Meßsequenzen) für jeweils einen Verschiebevorgang nach derjenigen Gesamt- bzw. Gruppen-Intensitätsverteilung bzw. demjenigen Gesamt-Empfangspegel die für alle vier Lichtwellenleiter-Kombinationen LW1/LW1* bis LW4/LW4* gleichzeitig jeweils das größte Einzel-Intensitätsmaximum (bzw. den größten Empfangspegel) aufweist. Es werden also jeweils die individuellen Einzel-Intensitätsverteilungen für alle vier Lichtwellenleiterpaare LW1/LW1* bis LW4/LW4* simultan beobachtet und schließlich dasjenige Aufnahmebild der Gruppen-Intensitätsverteilung sowie der zugehörige Ort während eines Verschiebevorganges von der Auswerteeinrichtung AE identifiziert und registriert, das für alle vier korrespondierenden Lichtwellenleiter-Paare LW1/LW1* bis LW4/LW4* in der zeitlichen Abfolge des jeweiligen Verschiebevorganges jeweils die größten individuellen Intensitätsmaxima gleichzeitig aufweist. Die Verschiebebewegung wird dann an derjenigen Stelle abgebrochen, an der sich für alle vier Lichtwellenleiter-Paare LW1/LW1* bis LW4/LW4* gleichzeitig jeweils das größte, selektive Intensitätsmaximum ergibt. An dieser Stelle liegt die größte gruppenweise "Verwandtschaft" zwischen den beiden Ortsverteilungen der Kerne der Lichtwellenleiter in den Bandleitungen BL1 und BL2 vor.

In Figur 7 wird die Bandleitung BL1 mittels der Haltevorrichtung HL1 in x-Richtung gegenüber der ruhenden Bandleitung BL2 verfahren. Zu diesem Zweck steuert die Auswerteeinrichtung AE die Haltevorrichtung HL1 über die Steuerleitung SL1 mit Hilfe des Steuersignals SS1 an. (entsprechend den Steuerleitungen zu Figur 1).

Weitere Kombinationen von Relativbewegungen zwischen den beiden Bandleitungen BL1 und BL2 sind analog zu Figur 1 durchführbar. Die Haltevorrichtung HL2 kann über die strichpunktiert eingezeichnete Steuerleitung SL2 mit Hilfe des Steuersignals SS2 betätigt werden. Die Auswerteeinrichtung AE sucht schließlich die Meßaufnahme mit den vier gleichzeitig größten Einzel-Intensitätsmaxima heraus. Sie gibt dem Meßwertspeicher MEM2 über eine Leitung B3 mittels eines Signals S3 den Auftrag, diese Gesamt-Intensitätsverteilung PiVER mit i = 1 bis 4 über eine Leitung B2 mittels eines Signals S2 visuell in einer Anzeigevorrichtung DSP2, insbesondere einem Display, darzustellen.

In Figur 7 sind in der Anzeigevorrichtung DSP2 die optimal erzielbaren Empfangs verhältnisse (optimaler Ausrichtzustand) für die Gesamt-Intensitätsverteilung PiVER mit i = 1 bis 4, d.h. maximaler Signalpegel für alle vier Lichtwellenleiter-Kombinationen LW1/LW1* bis LW4/LW4* gleichzeitig aufgezeichnet. Den vier Lichtwellenleiterpaaren LW1/LW1* bis LW4/LW4* sind vier Einhüllende P1VER bis P4VER als Einzel-Intensitätsverteilungen zugeordnet. Diese Einhüllenden P1VER bis P4VER zeigen vier Maxima M1VER bis M4VER, die alle in einem Toleranzbereich T zwischen einer oberen Schranke OS und einer unteren Schranke US liegen. Bei dieser Verschiebe-Bewegung in x-Richtung bei gleichzeitiger Festlegung eines US bzw. OS wird idealerweise zur Vereinfachung ein bereits optimal in y-Richtung für alle Faserpaare ausgerichteter Zustand vorausgesetzt. Die Maxima M1VER bis M4VER repräsentieren jeweils den Ort maximaler Lichtführung, d.h. die Zentren der aufeinander ausgerichteten Kerne der zu messenden Lichtwellenleiterpaare. Die untere Schranke US markiert denjenigen Intensitätswert, der jeweils mindestens für eine noch zulässige Ausrichtlage eines der Lichtwellenleiterpaare erforderlich ist. Die obere Schranke OS kennzeichnet hingegen denjenigen Intensitätswert, der für ein ideal fluchtendes Lichtwellenleiterpaar maximal erreicht werden kann.

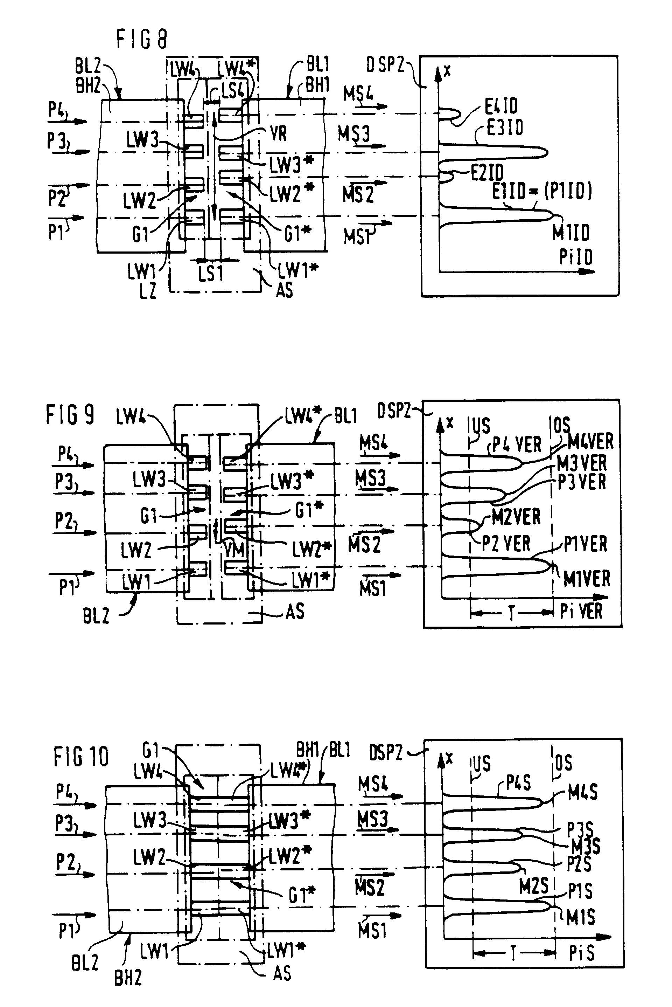

Innerhalb der Gesamt-Intensitätsverteilung PiVER mit i = 1 bis 4 für den gruppenweise optimalen Ausrichtzustand zeigt die Lichtwellenleiter-Kombination LW1/LW1* die Einhüllende P1VER mit dem absolut größten Maximum M1VER (M1VER > MiVER mit i = 2, 3, 4) knapp unterhalb der oberen Schranke OS. Daraus geht hervor, daß der Lichtwellenleiter LW1 nahezu ideal, d.h. fluchtend, auf den Lichtwellenleiter LW1* ausgerichtet ist. Die Lichtwellenleiter-Kombination LW2/LW2* stellt hingegen das am schlechtesten ausgerichtete Lichtwellenleiterpaar dar, da ihre zugehörige Einhüllende P2VER mit ihrem Maximalwert M2VER nur gerade noch oberhalb der unteren, zulässigen Schranke US liegt. Weitere Einzelheiten zur Auswertung der Gesamt-Intensitätsverteilung sind in den Figuren 8 mit 10 beschrieben.

Am Ort optimaler Übereinstimmung zwischen den beiden Gruppen G1 und G1* von Lichtwellenleitern lassen sich vorteilhaft Dämpfungsmessungen für die vier einander zugeordneten Lichtwellenleiter-Paare durchführen. Dort können auch vorteilhaft die Lichtwellenleiter LW1-LW4 mit den Lichtwellenleitern LW1* - LW4* mit Hilfe einer strichpunktiert angedeuteten Schweißvorrichtung SV2 paarweise verbunden werden. Für den Schweißvorgang sind die Lichtwellenleiter-Kombinationen LW1/LW1*-LW4/LW4* zweckmäßigerweise (entsprechend Figur 1) von ihren äußeren Umhüllungen BH2* bis BH1 vorab, d.h. vor dem Ausricht- und Schweißvorgang, befreit. Die Schweißvorrichtung SV2 wird von der Auswerteeinrichtung AE über eine strichpunktiert eingezeichnete Leitung SL8 mittels eines Steuersignals SS8 bedient. Die Steuerung des Schweißvorgangs kann dabei vorteilhaft in der bereits in den Figuren 1 und 2 beschriebenen Weise erfolgen.

Während das in Figur 1 vorgestellte erfindungsgemäße Verfahren zuerst die tatsächlichen, örtlichen Intensitätsverteilungen der Lichtwellenleiter in den beiden aufeinander auszurichtenden Bandleitungen liefert und dann erst aus diesen ein Maß für den "Verwandtschaftsgrad" zwischen den Kernpositionen der Lichtwellenleiter-Kombinationen, d. h. deren optimale Lage ermittelt wird, läßt sich der optimale Ausrichtzustand mit dem erfindungsgemäßen Verfahren nach Figur 7 auf direktem Weg bestimmen. Durch die einfache Relativbewegung bzw. "Jitter"-Bewegung der beiden Band leitungen gegeneinander kann das Meßverfahren weiter vereinfacht sowie die Arbeitsgeschwindigkeit erhöht werden.

Dadurch, daß Licht in die zu vermessenden Lichtwellenleiter der einen Gruppe eingekoppelt, an der Ausrichtsstelle in die korrespondierenden Lichtwellenleiter der anderen Gruppe übergekoppelt und schließlich das eingekoppelte Licht in diesen tatsächlich gemessen wird, kann die optimale, relative Lage der beiden Gruppen zueinander direkt mit hoher Genauigkeit und hoher Geschwindigkeit bestimmt werden.

Vorteilhaft können die erfindungsgemäßen Meßeinrichtungen nach den Figuren 1 und 7 Bestandteil eines Dämpfungs-Meßgerätes oder eines Spleißgerätes für die Mehrfasertechnik sein. Insbesondere können ihre jeweiligen Komponenten jeweils zu einem Meßkoffer zusammengefaßt sein.

In den Figuren 8 bis 10 wird zur Bestimmung optischer Übertragungskenngrößen, wie z.B. der Spleißdämpfung beim Verbinden zweier Gruppen von Lichtwellenleitern, insbesondere beim Verschweißen zweier Bandleitungen, beispielhaft das erfindungsgemäße Verfahren nach Figur 7 durchgeführt. Unverändert übernommene Elemente aus der Figur 7 sind in den Figuren 8 mit 10 jeweils mit den gleichen Bezugszeichen versehen.

In den Figuren 8 mit 10 sind in einer vergrößerten Draufsicht die beiden Bandleitungen BL1 und BL2 aus Figur 7 dargestellt. Um die beiden Bandleitungen BL1 und BL2 optimal miteinander verschweißen zu können, werden diese mit Hilfe des erfindungsgemäßen Verfahrens nach Figur 7 und der dort dargestellten erfindungsgemäßen Meßeinrichtung zunächst optimal aufeinander ausgerichtet. Die in der äußeren Umhüllung BH2 der Bandleitung BL2 fest eingebetteten Lichtwellenleiter LW1 bis LW4 werden also insgesamt als Gruppe G1 der Gruppe G1* mit den Lichtwellenleitern LW1* bis LW4*, die in der äußeren Umhüllung BH1 der Bandleitung BL1 fest eingelagert sind, optimal im Bereich der Ausrichtstelle AS zugeordnet. Für den Ausrichtvorgang stehen sich die Lichtwellenleiter LW1 bis LW4 der Bandleitung BL2 den Lichtwellenleitern LW1* bis LW4* der Bandleitung BL1 im Bereich der Ausrichtstelle AS zweckmäßigerweise jeweils mit einem Abstand LS1 bis LS4 zwischen 0 mm und 1 mm bezüglich ihrer Lichtwellenleiter-Enden gegenüber. Für den Verschweißvorgang sind die Lichtwellenleiter LW1 bis LW4 bzw. LW1* bis LW4* jeweils aus ihren äußeren Umhüllungen BH2 bzw. BH1 herausgelöst und gegebenenfalls von ihrer Beschichtung (coating) befreit, um Verunreinigungen durch ihr Umhüllungsmaterial an der Spleißstelle während des Verschweißvorganges und damit Beeinträchtigungen der Verbindungsqualität möglichst zu verhindern. Die Lichtwellenleiter LW1 bis LW4 bzw. LW1* bis LW4* sind zweckmäßigerweise auf einer relativ kurzen Länge, insbesondere zwischen 3 mm und 10 mm, im Bereich der Ausrichtstelle AS freigelegt. In diesem Fall können die Lichtwellenleiter LW1 bis LW4 bzw. LW1* bis LW4* vorteilhaft zur Lagesicherung in Führungsmittel, wie beispielhaft in Figur 1 dargestellt, eingelegt sein. In den Figuren 8 mit 10 ist die Lage der Lichtwellenleiterkerne, das heißt der Ort maximaler Lichtführung, der Lichtwellenleiter LW1 bis LW4 bzw. LW1* bis LW4* jeweils strichpunktiert angedeutet. Um den Verwandschaftsgrad zwischen den örtlichen Verteilungen der Gruppen G1 und G1* während des Ausricht- und Verschweißvorganges messen zu können, werden in die Lichtwellenleiter LW1 bis LW4 der Figuren 8 mit 10 Meßsignale P1 bis P4 entsprechend Figur 7 eingespeist. Deren zugehörige Strahlungsfelder treten an den offenen Enden der Lichtwellenleiter LW1 bis LW4 im Bereich der Ausrichtstelle AS aus und werden zumindest teilweise in die offenen Enden der Lichtwellenleiter LW1* bis LW4* der Gruppe G1* eingekoppelt. Der zeitliche Verlauf des übergekoppelten Lichtes in die Lichtwellenleiter LW1* bis LW4* wird entsprechend Figur 7 über Meßsignale MS1 bis MS4 aufgezeichnet und fortlaufend in der Anzeigevorrichtung DSP2 nach Figur 7 dargestellt. In den Figuren 8 mit 10 sind die für die Bestimmung der Spleißdämpfung erforderlichen Intensitätsverteilungen jeweils schematisch in der Anzeigevorrichtung DSP2 aufgezeichnet. Die Intensitätsverteilung gibt dabei jeweils die Verteilung der übergekoppelten Leistung wieder, die ihrerseits die Koppelwirkungsgrade bei der sendeseitigen Einkopplung und bei der empfangsseitigen Auskopplung von Licht repräsentiert. Zur Bestimmung der Spleißdämpfung in x-Richtung werden beispielhaft folgende unabhängige Meßschritte durchgeführt; (die Spleißdämpfung in y-Richtung kann in analoger Weise bestimmt werden). Im folgenden wird aber zur Vereinfachung vorausgesetzt, daß alle korrespondierenden Faserpaare in y-Richtung bereits optimal ausgerichtet sind, so daß z.B. nur noch eine Ausrichtung bezüglich der x-Richtung durchgeführt und diskutiert wird.

1. Meßschritt

In einem ersten Meßschritt wird die Bandleitung BL1 relativ zur Bandleitung BL2 mindestens einmal in x-Richtung (entsprechend dem Koordinatensystem von Figur 7) hin und her bewegt. In Figur 8 ist diese Hin- und Herbewegung ("Jitter") durch einen Doppelpfeil VR angedeutet, der in positiver und negativer x-Richtung weist. Die sich zunächst in einer unausgerichteten Ausgangslage gegenüberstehenden Bandleitungen BL1 und BL2 werden dabei jeweils um mindestens einen Verschiebeweg derart hin und her verschoben, daß für jedes der zu verbindende, korrespondierende Lichtwellenleiter-Paare LW1/LW1* bis LW4/LW4* jeweils individuell ein absolutes Intensitätsmaximum M1ID bis M4ID im zugehörigen bestmöglichen zeitlichen Intensitätsverlauf PiID mit i = 1 bis 4 des in die Lichtwellenleiter LW1* bis LW4* eingekoppelten Lichtes gemessen werden kann. Der Verschiebeweg setzt sich dabei aus dem größten auftretenden Versatz der am schlechtesten ausgerichteten Lichtwellenleiter-Kerne, wie z.B. in Figur 8 LW2/LW2*, sowie der jeweiligen Strahlungsfeld-Breite (ca. 10 μm bei Monomode-Lichtwellenleitern) im ursprünglich unausgerichteten Ausgangszustand der Bandleitungen BL1/BL2 zusammen. Indem also z.B. eine Art Zitterbewegung ("Jitter") entsprechend Figur 7 zwischen den beiden Bandleitungen BL1 und BL2 ausgeführt wird, ist es möglich, jeweils individuell ein absolutes Intensitätsmaximum M1ID bis M4ID für jedes korrespondierende Lichtwellenleiter-Paar zu überschreiten und somit jeweils individuell eine ortsaufgelöste bzw. zeitaufgelöste maximal mögliche (bestmögliche) Intensitätsverteilung P1ID bis P4ID bzw. Verteilung der übergekoppelten Leistung für jedes korrespondierende Lichtwellenleiter-Paar zu erhalten. (Bei einer konstanten Relativgeschwindigkeit entspricht der Verschiebeort der Verschiebezeit).

Den Lichtwellenleiter-Kombinationen LW1/LW1* bis LW4/LW4* sind als Einhüllende die Einzel-Intensitätsverteilungen bzw. individuellen Leistungsverteilungen E1ID bis E4ID zugeordnet. Deren zugehörige, im zeitlichen Verlauf auftretenden, bestmöglichen Koppelwirkungsgrade bzw. Intensitätsverteilungen P1ID bis P4ID kennzeichnen jeweils mit ihren Maxima M1ID bis M4ID den Ort fluchtender, individueller Ausrichtung zweier einander zugeordneter Lichtwellenleiter. Die in der Anzeigevorrichtung DSP2 abgebildete Momentaufnahme zeigt, daß für das Lichtwellenleiterpaar LW1/LW1* das absolute Intensitätsmaximum M1ID im zeitlichen Intensitätsverlauf E1ID (= P1ID) vorliegt und damit diese Lichtwellenleiter-Kombination LW1/LW1* gerade fluchtend ausgerichtet ist, d.h. sich ohne Versatz in x-Richtung gegenübersteht. Die Lichtwellenleiterpaare LW2/LW2*, LW3/LW3* bzw. LW4/LW4* sind hingegen in der Momentaufnahme von Figur 8 in x-Richtung unausgerichtet. (E2ID ≠ P2ID, E3ID ≠ P3ID, E4ID ≠ P4ID). Das Paar LW3/ LW3* ist etwa genauso ausgerichtet wie das Paar LW1/ LW1*, so daß deren Maxima deshalb etwa zum gleichen Zeitpunkt bei der Verschiebebewegung in x-Richtung überschritten werden.

Für diese werden sukzessive, d.h. zeitlich nacheinander, während der Jitter-Bewegung ebenfalls die Maxima M2ID bis M4ID einzeln überfahren. Die Maxima M1ID bis M4ID und/oder ihre zugehörigen bestmöglichen Leistungsverteilungen P1ID bis P4ID werden schließlich in der Auswerteeinrichtung AE von Figur 7 abgespeichert.

2. Meßschritt

Während nun die beiden Bandleitungen BL1 und BL2 relativ zueinander hin- und herverschoben werden, ergibt sich auch ein optimaler Ausrichtzustand, bei dem für alle korrespondierenden Lichtwellenleiterpaare LW1/LW1* bis LW4/LW4* die zugehörigen individuellen Leistungspegel gleichzeitig am größten sind. Dies ist dann der Ort größter Verwandtschaft zwischen den beiden Gruppen von Lichtwellenleitern. Dieser optimale Ausrichtzustand ist in Figur 9 in der Anzeigevorrichtung DSP2 dargestellt.

Alle Einzel-Intensitätsverteilungen PiVER mit i = 1 ... 4 liegen innerhalb eines Toleranzbereiches T zwischen einer unteren Schranke US und einer oberen Schranke OS. Die obere Schranke OS kennzeichnet den maximal erreichbaren Leistungspegel, der für eine individuelle Ausrichtung korrespondierender Lichtwellenleiterpaare ohne Versatz in x-Richtung erreichbar ist. Die untere Schranke US kennzeichnet hingegen denjenigen Leistungspegel, der für eine Spleißverbindung mit Versatz gerade noch tolerierbar bzw. akzeptabel ist.

Durch Normierung der Intensitätsverteilungen P1VER bis P4VER mit ihren bestmöglich, d.h. ohne Versatz erreichbaren Intensitätsverteilungen P1ID bis P4ID, d.h.

$$\frac{PiVer}{PiID} \text{ mit i} = 1 \text{ bis } 4,$$

wird der oberen Schranke OS zweckmäßigerweise der Wert 1 zugewiesen. (OS = 1). Für die untere Schranke US ergibt sich dann ein Wert kleiner 1 (US < 1). Wird für den Toleranzbereich T zweckmäßigerweise eine Differenz zwischen oberer Schranke OS (= 1) und unterer Schranke US (< 1) von 3 dB gewählt, so ergibt sich für die untere Schranke US = 0,5. Für alle normierten Leistungspegel

$$\frac{PiVER}{PiID} \text{ mit i} = 1 \text{ bis } 4$$

wird dann im optimalen Ausrichtzustand gefordert:

$$US = 0,5 < \frac{PiVER}{PiID} < 1 = OS \text{ mit i} = 1 \text{ bis } 4$$

In logarithmischer Darstellung ergibt sich die Beziehung:

$$o \text{ dB} < |10 \log \frac{PiVER}{PiID}| < 3 \text{ dB}$$

Genauso ist selbstverständlich auch eine Normierung der Intensitätsverteilungen PiVER mit i = 1 bis 4 auf die absoluten Maxima MiID mit i = 1 bis 4 der bestmöglich erreichbaren Intensitätsverteilungen PiID mit i = 1 bis 4 vorteilhaft möglich, d.h.

$$\frac{PiVER}{MiID} \text{ mit i} = 1 \text{ bis } 4.$$

Die Normierung bietet den Vorteil, daß die Auswertung insbesondere unabhängig vom Ausrichtzustand in y-Richtung sowie unabhängig von äußeren Einflußfaktoren wird, wie z.B. von den unterschiedlichen Koppelwirkungsgraden bei der sendeseitigen Einkopplung und bei der empfangsseitigen Auskopplung von Licht, wie sie z.B. durch unterschiedliche Farbaufträge (verschiedene Farben, unterschiedliche Schichtdicken, etc. ...) auf den Lichtwellenleitern in den Bandleitungen hervorgerufen werden können. In der Praxis können dabei bereits für die einzelnen Lichtwellenleiter Unterschiede im Koppelwirkungsgrad bis zu 30 dB auftreten, wodurch eine objektive Auswertung sehr unsicher würde. Durch die Normierung spielt es auch keine Rolle mehr, ob für die einzelnen Lichtwellenleiter gleich große oder verschieden große Sende-, Meßsignale und/oder Empfangssignale vorliegen.

In der Momentaufnahme von Figur 9 ist bei normiertem Auftrag der Lichtleistungen bzw. Intensitäten (sowie zur Vereinfachung unter Voraussetzung einer bereits erfolgten optimalen Ausrichtung in y-Richtung) das Lichtwellenleiter-Paar LW1/LW1* z.B. in x-Richtung annähernd ohne Versatz, d.h. ideal fluchtend, ausgerichtet. Die Lichtwellenleiterpare LW2/LW2* bis LW4/LW4* weisen hingegen einen verbleibenden, aber noch tolerierbaren Versatz auf, wobei die Lichtwellenleiter-Kombination LW2/LW2* den kleinsten Empfangspegel P2VER und damit den größten verbleibenden Versatz aufweist. In diesem optimalen Ausrichtzustand für alle Lichtwellenleiter der beiden Gruppen G1 und G1* zueinander werden die relativen Maxima MiVER mit 1 = 1 bis 4 der Einzel-Intensitätsverteilungen PiVER mit i = 1 bis 4 jeweils zweier korrespondierender Lichtwellenleiter ebenfalls in der Auswerteeinrichtung AE festgehalten. Schließlich werden die beiden Bandleitungen BL1 und BL2 in diesem Ausrichtzustand aufeinander zubewegt und der Verschweißvorgang entsprechend den Ausführungen zu den Figuren 1 bzw. 7 durchgeführt. Dabei kann der Schweißvorgang vorteilhaft durch den maximal verbleibenden Versatz des am schlechtesten ausgerichteten Lichtwellenleiter-Paares gesteuert werden. In Figur 9 ist das der Versatz des Lichtwellenleiter-Paares LW2/LW2*, das in der Anzeigevorrichtung DSP2 die größte Dämpfung, also die niedrigste Einzel-Intensitätsverteilung P2VER aufweist. Wird die untere Schranke US von einem Leistungspegel unterschritten, so wird der Verschweißvorgang abgebrochen und ein neuer Ausrichtvorgang gestartet.

3. Meßschritt

Nach Durchführung des Mehrfach-Spleißes für die beiden Gruppen G1 und G1* werden schließlich wiederum die Intensitätsverteilungen PiS mit i = 1 bis 4 mit ihren lokalen Maxima MiS mit i = 1 bis 4 der jeweils korrespondierenden Lichtwellenleiter-Paare gemessen und in der Auswerteeinrichtung AE von Figur 7 festgehalten. In Figur 10 ist beispielhaft eine Gesamt-Intensitätsverteilung PiS nach Ausführung des Schweißvorganges in der Anzeigevorrichtung DSP2 aufgezeichnet. Beim Verschweißen im optimalen Ausrichtzustand von Figur 9 verschwinden die verbleibenden Versätze der beiden Gruppen von Lichtwellenleitern durch die Oberflächenspannung des geschmolzenen Glases. Dabei kann selbst für schlecht ausgerichtete Lichtwellenleiterpaare wie z.B. hier für LW2/LW2* eine Verbesserung erzielt werden. (vgl. hierzu die Ausführungen in Figur 2), d.h. die Dämpfung vorteilhaft verringert werden. In Figur 10 zeigen alle Leistungspegel PiS mit i = 1 bis 4 eine leichte Verbesserung gegenüber der Aufnahme von Figur 9.

Mittels dieser drei Meßschritte kann die tatsächliche, individuelle Spleißdämpfung in x-Richtung für jedes korrespondierende Lichtwellenleiter-Paar LW1/LW1* bis LW4/LW4* selektiv berechnet werden. Dies kann zum Beispiel mit der Auswerteeinrichtung AE von Figur 7 durchgeführt werden. Die tatsächliche, individuelle Spleißdämpfung für jedes Lichtwellenleiter-Paar setzt sich im wesentlichen additiv aus drei Anteilen zusammen:

1. Bei der Mehrfaser-Technik verbleibt im optimalen Ausrichtzustand zweier Gruppen G1 und G1* von Lichtwellenleitern jeweils ein radialer Versatz für korrespondierende Lichtwellenleiter-Paare, da ein individuelles Ausrichten meist nicht möglich ist. Dadurch ergibt sich eine erhöhte Dämpfung, die aufgrund der Abweichung vom bestmöglichen (idealen), individuellen Ausrichtzustand zustandekommt. Das jeweilige Verhältnis der bestmöglichen Leistungspegel PiID mit i = 1 ... 4 im idealen Ausrichtzustand zu den Leistungspegeln PiVER mit i = 1 ... 4 im optimalen Ausrichtzustand beschreibt die durch den verbleibenden Versatz der beiden Gruppen G1 und G1* hervorgerufene Dämpfung $\Delta$ avi:

$$\Delta \text{ avi} = 10 \log \frac{\text{PiID}}{\text{PiVER}} \qquad \text{(Gleichung 1)}$$

mit i = 1 bis 4

Für die Dämpfung durch den verbleibenden Versatz in x-Richtung ergibt sich somit:

$$\Delta \text{ avi (x)} = 10 \log \frac{\text{PiID (x)}}{\text{PiVER (x)}} \text{ mit i = 1 bis 4.}$$

Insbesondere können auch die entsprechenden Maxima der Einfachheit halber ins Verhältnis gesetzt werden:

$$\Delta \, avi = 10 \log \frac{MiID}{MiVER} \; mit \; i = 1 \; bis \; 4$$

Ebenso können zweckmäßigerweise auch die Flächen unter den entsprechenden Intensitätsverteilungen ins Verhältnis gesetzt werden.

2. Diejenige Dämpfung $\Delta$ asi mit i = 1 ... 4, die jeweils durch das Verschweißen zweier korrespondierender Lichtwellenleiter verursacht wird, errechnet sich jeweils aus dem Verhältnis der Leistungspegel PiVER im optimalen Ausrichtzustand zu den Leistungspegeln PiS mit i = 1 ... 4 nach dem Verschweißen der korrespondierenden Lichtwellenleiter:

$$\Delta \, asi = 10 \log \frac{PiVER}{PiS} \qquad\qquad (Gleichung \; 2)$$

mit i = 1 bis 4

Für die Dämpfungsänderung in x-Richtung durch den Schweißvorgang gilt somit:

$$\Delta \, asi \, (x) = 10 \log \frac{PiVER \, (x)}{PiS} \; mit \; i = 1 \; bis \; 4$$

Entsprechend zu 1. können auch vorteilhaft die zugehörigen Maxima oder die Flächen unter den zugehörigen Leistungspegeln ins Verhältnis gesetzt werden.

$$\Delta \, asi = 10 \log \frac{MiVER}{MiS} \; mit \; i = 1 \; bis \; 4.$$

3. Schließlich kann derjenige Dämpfungsanteil $\Delta$ ali mit i = 1 bis 4, der jeweils durch unterschiedliche, individuelle Luftspaltlängen LS1 bis LS4 (vgl. Figur 8) zwischen jeweils zwei korrespondierenden Lichtwellenleitern hervorgerufen wird, mit Hilfe folgender Korrekturformel annäherungsweise berücksichtigt werden:

In guter Näherung bestimmt sich die Luftspaltdämpfung $\Delta$ ali wie folgt:

$\Delta$ al ist die Luftspaltdämpfung bei einem ideal ausgerichteten Lichtwellenleiter-Paar (und daher unabhängig von i). $\Delta$ al beträgt ca. 0,3 dB durch Reflexionen beim Übergang Glas-Luft bzw. Luft-Glas (Beugungen). Bei großen Luftspaltlängen kann eine additive Korrektur nötig werden (entsprechenbd der Luftspaltlänge LSi mit i = 1 bis 4 des i-ten Faserpaares in z-Richtung)

$$\Delta \, ali = \Delta \, al + \Delta \, azi$$

wobei

$$\Delta \; azi \; = \; - \, 10 \, \log \; \frac{1}{1 + \left(\dfrac{Lsi}{2\,a}\right)^2}$$

mit i = 1 bis 4 und LSi in $\mu$m

Der Faktor a kann empirisch für Monomode-Lichtwellenleiter ermittelt werden, wobei a eine Funktion des Felddurchmessers und der Wellenlänge ist. Für konventionelle Einmodenfasern beträgt a $\approx$ 50/$\mu$m für 1300 nm (Wellenlänge). In Figur 6 ist die Luftspaltdämpfung $\Delta$ ali in Abhängigkeit von der Luftspaltlänge LSi mit i = 1 bis 4 aufgezeichnet. Geht die Luftspaltlänge LSi gegen null (LSi = 0), so verbleiben immer ungefähr 0,3 dB Verluste durch Reflexionen beim Übergang Glas-Luft bzw. Luft-Glas im Übergangsbereich zwischen zwei fluchtend, das heißt ideal, ausgerichteten Lichtwellenleitern. Nimmt die Luftspaltlänge LSi zu (LSi > 0), so kommen Verluste durch Beugungseffekte hinzu. Diese können durch die additive Korrektur formel getrennt für jedes Lichtwellenleiter-Paar LW1/LW1* bis LW4/LW4* berücksichtigt werden.

Die Gesamtspleißdämpfung $\Delta$ ai mit i = 1 bis 4 ergibt sich somit selektiv und individuell für jedes miteinander zu verbindende Lichtwellenleiter-Paar LW1/LW1* bis LW4/LW4* additiv aus den drei Teil-Dämpfungen $\Delta$ ali, $\Delta$ avi und $\Delta$ asi:

$$\Delta\ ai = \Delta\ ali + \Delta\ avi + \Delta\ asi \qquad\qquad\qquad \text{(Gleichung 4)}$$

mit i = 1 ... 4

In den Figuren 8 bis 10 wird nur der Fall behandelt, das eine Ausrichtung der Bandleitungen BL1 und BL2 in x-Richtung erfolgt. Eine entsprechende Ausrichtung der Bandleitungen BL1 und BL2 aufeinander kann selbstverständlich zusätzlich vor dem Schweißvorgang auch in einer beliebigen Richtung quer zur Längsachse der beiden Bandleitungen BL1 und BL2 durchgeführt werden. Zweckmäßigerweise kann so zum Beispiel jeweils die individuelle, selektive Dämpfung $\Delta$ avi (x) durch einen Versatz in x-Richtung und $\Delta$ avi (y) durch einen verbleibenden Versatz in y-Richtung für jeweils zwei korrespondierende, miteinander zu verschweißende Lichtwellenleiter-Paare bestimmt werden.

Gleichung 4 aufgelöst lautet dann:

$$\Delta\ ai = \Delta\ ali + \Delta\ avix + \Delta\ aviy + \Delta\ asi$$

mit

$$\Delta\ avi = \Delta\ avix + \Delta\ aviy$$

durch den Versatz in x- und y-Richtung.

Obwohl in den Figuren 8 mit 10 jeweils nur auf die Spleiß-dämpfung Bezug genommen wurde, gelten die dort vorgestellten Methoden und Verfahren sowie ihre Vorteile auch bei der Bestimmung weiterer optischer Übertragungskenngrößen wie z.B. Phasenlaufzeiten, Transmissionsverhalten, Impulsantworten, usw. ... . Die in den Figuren 8 mit 10 aufgezeigten Vorteile können dabei auch ohne das erfindungsgemäße Verfahren zur Ermittlung der Lage der Lichtwellenleiter in den beiden Gruppen erreicht werden.

Die in den Figuren 1 bis 10 dargestellten Ausführungsbeispiele und die dazu getroffenen Aussagen beziehen sich zur besseren Veranschaulichung jeweils auf eine konkrete Zahl (n = 4) von Lichtwellenleitern. Sie sind jedoch ohne Einschränkung auf beliebig viele Lichtwellenleiter übertragbar.

**Patentansprüche**

1. Verfahren zur Ermittlung der örtlichen Lage von Lichtwellenleitern (LW1 bis LW4, LW1* bis LW4*), die jeweils zu mehreren in zwei Gruppen (G1, G1*) und dort jeweils in einer Ebene nebeneinander angeordnet sind, unter Verwendung einer Sendeeinrichtung (SE1), die einer der beiden Gruppen (G1, G1*) zugeordnet ist, wobei eine erste der beiden Gruppen (G1*) relativ gegenüber der zweiten Gruppe (G1) in mindestens einer Richtung parallel zu derjenigen Ebene, in der die Längsachsen der Lichtwellenleiter (LW1 bis LW4) der zweiten Gruppe (G1) liegen, mindestens einmal verschoben wird, wobei während dieses Verschiebevorgangs von der Sendeeinrichtung (SE1) Licht in mindestens einen Lichtwellenleiter (LW1 bis LW4) einer der beiden Gruppen (G1) eingekoppelt wird, wobei während des Verschiebevorgangs aus dem jeweilig an der Sendeeinrichtung (SE1) angekoppelten Lichtwellenleiter (LW1 bis LW4) fortlaufend Licht jeweils in mindestens einen Lichtwellenleiter (LW1* bis LW4*) der anderen Gruppe (G1*) übergekoppelt wird, wobei während des Verschiebevorgangs jeweils der zeitliche Intensitätsverlauf des eingekoppelten Lichts in diesem Lichtwellenleiter (LW1* bis LW4*) der anderen Gruppe (G1*) aufgenommen wird, wobei die Relativbewegung der beiden Gruppen (Gl, G1*) gegeneinander derart durchgeführt wird, daß mit dem während der Verschiebebewegung aufgenommenen Licht eine zeitliche Gruppen-Intensitätsverteilung (PMi* bzw. PMi) gewonnen und festgehalten wird, durch die den lichtdurchlaufenen Lichtwellenleitern (LW1* bis LW4* bzw. LW1 bis LW4) der jeweiligen Gruppe (G1*, G1) Einzel-Intensitätsverteilungen (I1* bis I4* bzw. I1 bis I4) getrennt zugeordnet werden können, und wobei aus diesen Einzel-Intensitätsverteilungen der festgehaltenen Gruppen-Intensitätsverteilung (PMi* bis PMi), die relative örtliche Lage (X* bzw. X)) der Lichtwellenleiter (LW1* bis LW4*, LW1 bis LW4) in der jeweiligen Gruppe (G1*, G1) bestimmt und zu Auswertezwecken festgehalten wird.

2. Verfahren nach Anspruch 1,
   **dadurch gekennzeichnet**,
   daß die erste Gruppe (G1*) gegenüber der zweiten Gruppe (G1) mindestens einmal verschoben wird.

3. Verfahren nach Anspruch 1,
   **dadurch gekennzeichnet**,

daß die zweite Gruppe (G1) gegenüber der ersten Gruppe (G1*) mindestens einmal verschoben wird.

4. Verfahren nach Anspruch 1,
   **dadurch gekennzeichnet**,
   daß die zweite Gruppe (G1) und die erste Gruppe (G1*) gleichzeitig gegeneinander verschoben werden.

5. Verfahren nach einem der vorhergehenden Ansprüche,
   **dadurch gekennzeichnet**,
   daß in einen Beobachtungs-Lichtwellenleiter (zum Beispiel LW1*) der ersten Gruppe (z.B. G1*) fortlaufend Licht aus den Lichtwellenleitern (LW1 bis LW4) der zweiten Gruppe (G1) eingekoppelt wird, daß während der Relativbewegung der beiden Gruppen (G1, G1*) aus dem zeitlichen Intensitätsverlauf des in diesen Beobachtungs-Lichtwellenleiter (zum Beispiel LW1*) eingekoppelten Lichts eine Gruppen-Intentsitätsverteilung (PMi) der Lichtwellenleiter (LW1 bis LW4) der zweiten Gruppe (G1) gewonnen und festgehalten wird, und daß aus der festgehaltenen Gruppen-Intensitätsverteilng (PMi) den lichtdurchlaufenen Lichtwellenleitern (LW1 bis LW4) der zweiten Gruppe (G1) Einzel-Intensitätsverteilungen (J1 bis J4) getrennt zugeordnet werden, aus denen die relative örtliche Lage (X) dieser Lichtwellenleiter (LW1 bis LW4) in der zweiten Gruppe (G1) festgehalten wird.

6. Verfahren nach einem der Ansprüche 1 mit 4,
   **dadurch gekennzeichnet**,
   daß in einen Beobachtungs-Lichtwellenleiter (zum Beispiel LW1) der zweiten Gruppe (z.B. G1) fortlaufend Licht aus den Lichtwellenleitern (LW1* bis LW4*) der ersten Gruppe (G1*) eingekoppelt wird, daß während der Relativbewegung der beiden Gruppen (G1, G1*) aus dem zeitlichen Intensitätsverlauf des in diesen Beobachtungs- Lichtwellenleiter (LW1) eingekoppelten Lichts eine Gruppen-Intensitätsverteilung (PMi*) der Lichtwellenleiter (LW1* bis LW4*) der ersten Gruppe (G1*) gewonnen und festgehalten wird, und daß aus der festgehaltenen Gruppen-Intensitätsverteilung (PMi*) den lichtdurchlaufenen Lichtwellenleitern (LW1 bis LW4) der ersten Gruppe (G1*) Einzel-Intensitätsverteilungen (J1* bis J4*) getrennt zugeordnet werden, aus denen die relative örtliche Lage (X*) dieser Lichtwellenleiter (LW1* bis LW4*) in der ersten Gruppe (G1*) festgehalten wird.

7. Verfahren nach einem der Ansprüche 5 oder 6,
   **dadurch gekennzeichnet**,
   daß als Beobachtungs-Lichtwellenleiter ein Lichtwellenleiter der ersten und/oder der zweiten Gruppe (G1*, G1) verwendet wird.

8. Verfahren nach einem der Ansprüche 5 oder 6,
   **dadurch gekennzeichnet**,
   daß als Beobachtungs-Lichtwellenleiter ein eigener Meß-Lichtwellenleiter eingesetzt wird.

9. Verfahren nach einem der Ansprüche 1 mit 4,
   **dadurch gekennzeichnet**,
   daß während des Verschiebevorgangs fortlaufend Licht aus den Lichtwellenleitern (LW1 bis LW4) der zweiten Gruppe (G1) jeweils in die zugeordneten, korrespondierenden Lichtwellenleiter (LW1* bis LW4*) der ersten Gruppe (G1*) eingekoppelt wird, und daß aus dem zeitlichen Verlauf der Gruppen-Intensitätsverteilung des übergekoppelten Lichts in die Lichtwellenleiter (LW1* bis LW4*) der ersten Gruppe (G1*) die relative örtliche Lage der Lichtwellenleiter (LW1* bis LW4*) in der ersten Gruppe (G1*) gegenüber der örtlichen Lage der Lichtwellenleiter (LW1 bis LW4) in der zweiten Gruppe (G1) direkt gewonnen wird.

10. Verfahren nach einem der vorhergehenden Ansprüche,
    **dadurch gekennzeichnet**,
    daß die örtliche Gruppen-Intensitätsverteilung (PMi*) des Lichts in den Lichtwellenleitern (LW1* bis LW4*) der ersten Gruppe (G1*) mit der örtlichen Gruppen-Intensitätsverteilung (PMi) des Lichts in den Lichtwellenleitern (LW1 bis LW4) der zweiten Gruppe (G1) korreliert wird.

11. Verfahren nach einem der vorhergehenden Ansprüche,
    **dadurch gekennzeichnet**,
    daß jeweils ein Lichtwellenleiter (zum Beispiel LW1*) der ersten Gruppe (G1*) und/oder sein korrespondierender Lichtwellenleiter der zweiten Gruppe (G1) in ein Führungsmittel (FM*, FM) eingelegt werden.

12. Verfahren nach einem der vorhergehenden Ansprüche,

**dadurch gekennzeichnet**,
daß die erste Gruppe (G1*) und die zweite Gruppe (G1) mindestens einmal relativ zueinander in der Art einer Zitterbewegung ("Jitter"-Bewegung) hin- und herbewegt werden.

**13.** Verfahren nach einem der vorhergehenden Ansprüche,
**dadurch gekennzeichnet**,
daß die relative Verschiebung der beiden Gruppen (G1*, G1) gegeneinander jeweils um mindestens den maximal verbleibenden Versatz zweier korrespondierender Lichtwellenleiter (LW1*, LW1) durchgeführt wird.

**14.** Verfahren nach einem der vorhergehenden Ansprüche,
**dadurch gekennzeichnet**,
daß die erste Gruppe (G1*) gegenüber der zweiten Gruppe (G1) in einer Ebene (z.B. in y- Richtung) senkrecht zur ersten Betrachtungsebene (z.B. x- Richtung) mindestens einmal relativ zueinander verschoben wird, und daß dabei der zeitliche Verlauf der Gruppen-Intensitätsverteilung des übergekoppelten Lichts registriert wird.

**15.** Verfahren nach einem der vorhergehenden Ansprüche,
**dadurch gekennzeichnet**,
daß aus dem zeitlichen Verlauf der Gruppen-Intensitätsverteilung (PMi, PMi*) der laterale Versatz jeweils zweier einander zugeordneter, korrespondierender Lichtwellenleiter (zum Beispiel LW1*/LW1) der ersten und der zweiten Gruppe (G1*, G1) selektiv bestimmt wird.

**16.** Verfahren nach einem der vorhergehenden Ansprüche,
**dadurch gekennzeichnet**,
daß während des Verschiebevorgangs jeweils zwei korrespondierende Lichtwellenleiter (zum Beispiel LW1*, LW1) der ersten und der zweiten Gruppe (G1*, G1) zeitlich nacheinander fluchtend aufeinander ausgerichtet werden, und daß jeweils in diesem idealen Ausrichtzustand zweier korrespondierender Lichtwellenleiter (zum Beispiel LW1*, LW1) die zeitliche Einzel-Intensitätsverteilung (PilD mit i = 1 bis 4) des in ihnen geführten Lichts (MS1 mit MS4) individuell gemessen und festgehalten wird.

**17.** Verfahren nach einem der vorhergehenden Ansprüche,
**dadurch gekennzeichnet**,
daß die erste und die zweite Gruppe (G1*, G1) in einen optimalen Ausrichtzustand größter Verwandtschaft gebracht werden, bei dem sich für alle korrespondierenden Lichtwellenleiter (zum Beispiel (LW1*, LW1) der ersten und der zweiten Gruppe (G1*, G1) gleichzeitig jeweils ein Intensitätsmaximum des in ihnen geführten Lichts (MS1 bis MS4) ergibt.

**18.** Verfahren nach Anspruch 17,
**dadurch gekennzeichnet**,
daß in diesem optimalen Ausrichtzustand für jeweils zwei einander zugeordnete Lichtwellenleiter (zum Beispiel LW1*/LW1) die zeitliche Einzel-Intensitätsverteilung (PiVER mit i = 1 bis 4) des in ihnen geführten Lichts (MS1 bis MS4) individuell gemessen und festgehalten wird.

**19.** Verfahren nach einem der Ansprüche 17 oder 18,
**dadurch gekennzeichnet**,
daß die erste und die zweite Gruppe (G1*, G1) in ihren optimalen Ausrichtungsstand gebracht werden, und daß jeweils zwei korrespondierende Lichtwellenleiter (zum Beispiel LW1*/LW1) der ersten und der zweiten Gruppe (G1*, G1) miteinander verspleißt, insbesondere verschweißt werden.

**20.** Verfahren nach einem der vorhergehenden Ansprüche,
**dadurch gekennzeichnet**,
daß die Lichtwellenleiter (LW1* bis LW4*) der ersten Gruppe (G1*) mit den Lichtwellenleitern (LW1 bis LW4) der zweiten Gruppe (G1) miteinander verspleißt werden, und daß der Spleißvorgang mittels der zeitlichen Gruppen-Intensitätsverteilung des Lichts gesteuert wird, das während des Verspleißens von mindestens einem Lichtwellenleiter (zum Beispiel LW2) der einen Gruppe in mindestens einem Lichtwellenleiter (zum Beispiel LW2*) der anderen Gruppe übergekoppelt wird.

**21.** Verfahren nach Anspruch 20,
**dadurch gekennzeichnet**,

daß das Verspleißen mittels derjenigen Einzel-Intensitätsverteilung (PS(t)) gesteuert wird, die den beiden am schlechtesten zueinander ausgerichteten Lichtwellenleitern (zum Beispiel LW3/LW3*) beider Gruppen (G1, G1*) zugeordnet ist.

22. Verfahren nach einem der Ansprüche 19 bis 21,
**dadurch gekennzeichnet**,
daß nach dem Spleißvorgang jeweils zweier korrespondierender Lichtwellenleiter (z.B. LW1*/LW1) der ersten und der zweiten Gruppe (G1*, G1) die zugehörige Einzel-Intensitätsverteilung (PiS mit I = 1 bis 4) des in ihnen geführten Lichts selektiv gemessen wird.

23. Verfahren nach einem der vorhergehenden Ansprüche,
**dadurch gekennzeichnet**,
daß in einem ersten Meßschritt während der Verschiebebewegung zeitlich nacheinander jeweils zwei einander zugeordnete Lichtwellenleiter (zum Beispiel LW1*, LW1) der ersten und der zweiten Gruppe (G1*, G1) aufeinander fluchtend ausgerichtet werden, daß in diesem idealen Ausrichtzustand jeweils die zugehörige zeitliche Einzel-Intensitätsverteilung (PiID mit i = 1 bis 4) des in ihnen geführten Lichts (MS1 bis MS4) selektiv bestimmt und festgehalten wird, daß in einem zweiten Meßschritt für die erste und die zweite Gruppe (G1*, G1) von Lichtwellenleitern ein optimaler Ausrichtzustand während des Verschiebevorgangs ermittelt wird, in dem sich für alle korrespondierenden Lichtwellenleiter (zum Beispiel LW1*, LW1) der ersten und der zweiten Gruppe (G1*, G1) gleichzeitig jeweils ein Intensitätsmaximum des in ihnen geführten Lichts (MS1 bis MS4) ergibt, und die beiden Gruppen (G1*, G1) dorthin verfahren werden, daß in diesem optimalen Ausrichtzustand für jeweils zwei korrespondierende Lichtwellenleiter (zum Beispiel LW1*, LW1) die zugehörige zeitliche Einzel-Intensitätsverteilung (PiVER mit i = 1 bis 4) des in ihnen geführten Lichts (MS1 bis MS4) gemessen und festgehalten wird, daß in einem dritten Meßschritt die beiden Gruppen (G1*, G1) in den ermittelten optimalen Ausrichtzustand gebracht werden, dort deren korrespondierende Lichtwellenleiter miteinander verspleißt werden, und daß schließlich nach dem Spleißvorgang für jeweils zwei miteinander verbundene Lichtwellenleiter (zum Beispiel LW1*, LW1) die zugehörige zeitliche Einzel-Intensitätsverteilung (PiS mit i = 1 bis 4) des in ihnen geführten Lichts (MS1 bis MS4) ermittelt und festgehalten wird, und daß aus den so in drei Meßschritten erhaltenen zeitlichen Einzel-Intensitätsverteilungen für jeweils zwei miteinander verbundene Lichtwellenleiter (zum Beipsiel LW1*, LW1) deren Spleiß-Dämpfung selektiv bestimmt wird.

24. Einrichtung zur Durchführung des Verfahrens nach einem der vorhergehenden Ansprüche, bei der eine erste Haltevorrichtung (HL1*) mit einer ersten der beiden Gruppen (G1*) von Lichtwellenleitern (LW1* bis LW4*) relativ zu einer zweiten Haltevorrichtung (HL1) mit einer zweiten Gruppe (G1) von Lichtwellenleitern (LW1 bis LW4) mindestens einmal in mindestens eine Richtung parallel zu derjenigen Ebene, in der die Längsachsen der Lichtwellenleiter (LW1 bis LW4) der zweiten Gruppe (G1) liegen, verschiebbar angeordnet ist, bei der eine Sendeeinrichtung (SE1) an mindestens einen Lichtwellenleiter (LW1 bis LW4) einer der beiden Gruppen (G1) zur Lichteinkopplung während des Verschiebevorgangs angekoppelt ist, bei der an mindestens einen Lichtwellenleiter (LW1* bis LW4*) der anderen Gruppe (G1*) eine Empfangseinrichtung (EM1) angekoppelt ist, die den zeitlichen Intensitätsverlauf des Lichts aufnimmt, das während des Verschiebevorgangs aus dem an der Sendeeinrichtung (SE1) jeweilig angekoppelten Lichtwellenleiter (LW1 bis LW4) fortlaufend in den an der Empfangseinrichtung (EM1) jeweilig angekoppelten Lichtwellenleiter (LW1* bis LW4*) eingekoppelt wird, bei der die beiden Halteeinrichtungen (HL1*, HL1) mit den beiden Gruppen (G1*, G1) derart relativ zueinander beweglich sind, daß mit dem während der Verschiebebewegung aufgenommenen Licht eine zeitliche Gruppen-Intentsitätsverteilung (PMi*, PMi) gewinnbar ist, die den lichtdurchlaufenen Lichtwellenleitern (LW1* bis LW4* bzw. LW1 bis LW4) der jeweiligen Gruppe (G1*, G1) Einzel-Intensitätsverteilungen (J1* bis J4* bzw. J1 bis J4) getrennt zuordnet und bei der eine Speichereinrichtung (MEM1) vorgesehen ist, die diese Gruppen-Intensitätsverteilung (PMi* bzw. PMi) festhält und aus deren Einzel-Intensitätsverteilungen die relative örtliche Lage (X* bzw. X) der lichtdurchlaufenen Lichtwellenleiter (LW1 bis LW4, LW1* bis LW4*) in der jeweiligen Gruppe (G1*, G1) bestimmt und zu Auswertezwecken festhält.

25. Einrichtung nach Anspruch 24,
**dadurch gekennzeichnet**,
daß ein Korrelator (COR) zur Bestimmung einer optimalen Ausrichtposition der beiden Gruppen (G1*, G1) aus deren beiden zugehörigen, örtlichen Gruppen-Intensitätsverteilungen (PMI*, PMI) vorgesehen ist, in der sich für alle korrespondierenden Lichtwellenleiter (zum Beispiel LW1*, LW1) der ersten und zweiten Gruppe (G1*, G1) gleichzeitig jeweils ein Intensitätsmaximum des in ihnen geführten Lichts (MS1 bis MS4) ergibt.

26. Einrichtung nach einem der Ansprüche 24 oder 25,

**dadurch gekennzeichnet**,
daß jeweils eine Anzeigevorrichtung (AZ1, AZ2) zur visuellen Darstellung der zeitlichen und/oder örtlichen Gruppen-Intensitätsverteilung (PMI, PMI*) des in den Lichtwellenleitern (LW1 bis LW4, LW1* bis LW4*) der beiden Gruppen (G1, G1*) geführten Lichts vorgesehen ist.

**27.** Einrichtung nach einem der Ansprüche 24 bis 26,
**dadurch gekennzeichnet**,
daß eine Anzeigevorrichtung (DSP1) zur Anzeige der Kreuzkorrelationsfunktion (COR ($\Delta$x)) zwischen den zeitlichen Gruppen-Intensitätsverteilungen des in der ersten und der zweiten Gruppe (G1*, G1) geführten Lichts vorgesehen ist.

**28.** Einrichtung nach einem der Ansprüche 24 bis 27,
**dadurch gekennzeichnet**,
daß ein Steuergerät (CTU) zum Verschieben der Haltevorrichtungen (zum Beispiel HL1*) vorgesehen ist.

**29.** Einrichtung nach einem der Ansprüche 24 bis 28,
**dadurch gekennzeichnet**,
daß die Empfangseinrichtung (EM1) mindestens ein lichtempfindliches Element (PD1) aufweist.

**30.** Einrichtung nach einem der Ansprüche 24 bis 29,
**dadurch gekennzeichnet**,
daß die Einrichtung Bestandteil eines Lichtwellenleiter-Spleißgerätes ist.

## Claims

**1.** Method for determining the local position of optical waveguides (LW1 to LW4, LW1* to LW4*), which are in each case arranged to form a plurality in two groups (G1, G1*), where they are in each case arranged in one plane next to one another, using a transmitting device (SE1), which is assigned to one of the two groups (G1, G1*), a first of the two groups (G1*) being displaced at least once relative to the second group (G1) in at least one direction parallel to that plane in which the longitudinal axes of the optical waveguides (LW1 to LW4) of the second group (G1) lie, the transmitting device (SE1) coupling light into at least one optical waveguide (LW1 to LW4) of one of the two groups (G1) during this displacement operation, light being continually coupled over from the optical waveguide (LW1 to LW4) that is respectively coupled to the transmitting device (SE1) in each case into at least one optical waveguide (LW1* to LW4*) of the other group (G1*) during the displacement operation, there being recorded, during the displacement operation, the respective temporal intensity profile of the coupled-in light in this optical waveguide (LW1* to LW4*) of the other group (G1*), the movement of the two groups (G1, G1*) relative to one another being carried out in such a way that with the light recorded during the displacement movement, a temporal group intensity distribution (PMi* and PMi, respectively) is obtained and stored, by means of which distribution the optical waveguides (LW1* to LW4* and LW1 to LW4, respectively), through which light passes, of the respective group (G1*, G1) can be separately assigned individual intensity distributions (I1* to I4* and I1 to I4, respectively), and the relative local position (X* and X, respectively) of the optical waveguides (LW1* to LW4*, LW1 to LW4) in the respective group (G1*, G1) being determined from these individual intensity distributions of the stored group intensity distribution (PMi* to PMi) and being stored for evaluation purposes.

**2.** Method according to Claim 1, characterized in that the first group (G1*) is displaced at least once relative to the second group (G1).

**3.** Method according to Claim 1, characterized in that the second group (G1) is displaced at least once relative to the first group (G1*).

**4.** Method according to Claim 1, characterized in that the second group (G1) and the first group (G1*) are simultaneously displaced relative to one another.

**5.** Method according to one of the preceding claims, characterized in that light is constantly coupled from the optical waveguides (LW1 to LW4) of the second group (G1) into an observational optical waveguide (for example LW1*) of the first group (for example G1*), in that during the relative movement of the two groups (G1, G1*), the group intensity distribution (PMi) of the optical waveguides (LW1 to LW4) of the second group (G1) is obtained from the temporal intensity profile of the light coupled into this observational optical waveguide (for example LW1*) and is stored, and in that from the stored group intensity distribution (PMi), the optical waveguides (LW1 to LW4) through which light passes, of the second group (G1) are separately assigned individual intensity distributions (J1 to J4), from which the relative local position (X) of these optical waveguides (LW1 to LW4) in the second group (G1) is stored.

6. Method according to one of Claims 1 with 4, characterized in that light is constantly coupled from the optical waveguides (LW1* to LW4*) of the first group (G1*) into an observational optical waveguide (for example LW1) of the second group (for example G1), in that during the relative movement of the two groups (G1, G1*), a group intensity distribution (PMi*) of the optical waveguides (LW1* to LW4*) of the first group (G1*) is obtained from the temporal intensity profile of the light coupled into this observational optical waveguide (LW1) and is stored, and in that from the stored group intensity distribution (PMi*), the optical waveguides (LW1 to LW4), through which light passes, of the first group (G1*) are separately assigned individual intensity distributions (J1* to J4*), from which the relative local position (X*) of these optical waveguides (LW1* to LW4*) in the first group (G1*) is stored.

7. Method according to either of Claims 5 and 6, characterized in that an optical waveguide of the first and/or of the second group (G1*, G1) is used as the observational optical waveguide.

8. Method according to either of Claims 5 and 6, characterized in that a dedicated measurement optical waveguide is used as the observational optical waveguide.

9. Method according to one of Claims 1 with 4, characterized in that light is constantly coupled from the optical waveguides (LW1 to LW4) of the second group (G1) in each case into the assigned, corresponding optical waveguides (LW1* to LW4*) of the first group (G1*) during the displacement operation, and in that the relative local position of the optical waveguides (LW1* to LW4*) in the first group (G1*) relative to the local position of the optical waveguides (LW1 to LW4) in the second group (G1) is obtained directly from the temporal profile of the group intensity distribution of the light coupled over into the optical waveguides (LW1* to LW4*) of the first group (G1*).

10. Method according to one of the preceding claims, characterized in that the local group intensity distribution (PMi*) of the light in the optical waveguides (LW1* to LW4*) of the first group (G1*) is correlated with the local group intensity distribution (PMi) of the light in the optical waveguides (LW1 to LW4) of the second group (G1).

11. Method according to one of the preceding claims, characterized in that a respective optical waveguide (for example LW1*) of the first group (G1*) and/or its corresponding optical waveguide of the second group (G1) are laid into a guide means (FM*, FM).

12. Method according to one of the preceding claims, characterized in that the first group (G1*) and the second group (G1) are moved back and forth at least once relative to one another after the manner of a jitter movement.

13. Method according to one of the preceding claims, characterized in that the relative displacement of the two groups (G1*, G1) relative to one another is performed in each case by at least the maximum remaining offset of two corresponding optical waveguides (LW1*, LW1).

14. Method according to one of the preceding claims, characterized in that the first group (G1*) is displaced relative to the second group (G1) in a plane (for example in the y direction) perpendicular to the first observation plane (for example x direction) at least once relative to one another, and in that the time profile of the group intensity distribution of the light coupled over is recorded in the process.

15. Method according to one of the preceding claims, characterized in that the lateral offset of in each case two mutually assigned, corresponding optical waveguides (for example LW1*/LW1) of the first and second groups (G1*, G1) is determined selectively from the time profile of the group intensity distribution (PMi, PMi*).

16. Method according to one of the preceding claims, characterized in that in each case two corresponding optical waveguides (for example LW1*, LW1) of the first and second groups (G1*, G1) are chronologically successively aligned with one another during the displacement operation, and in that, in each case in this ideal alignment state of two corresponding optical waveguides (for example LW1*, LW1), the temporal individual intensity distribution (PiID, where i = 1 to 4) of the light (MS1 with MS4) guided in them is individually measured and stored.

17. Method according to one of the preceding claims, characterized in that the first and the second group (G1*, G1) are brought into an optimum alignment state of greatest relationship, in which, for all of the corresponding optical waveguides (for example LW1*, LW1) of the first and second groups (G1*, G1), an intensity maximum of the light (MS1 to MS4) guided in them is respectively produced simultaneously.

18. Method according to Claim 17, characterized in that in this optimum alignment state for in each case two mutually assigned optical waveguides (for example LW1*/LW1), the temporal individual intensity distribution (PiVER, where i = 1 to 4) of the light (MS1 to MS4) guided in them is individually measured and stored.

19. Method according to either of Claims 17 and 18, characterized in that the first and second groups (G1*, G1) are brought into their optimum alignment state, and in that in each case two corresponding optical waveguides (for example LW1*/LW1) of the first and second groups (G1*, G1) are spliced, in particular welded, together.

20. Method according to one of the preceding claims, characterized in that the optical waveguides (LW1* to LW4*) of the first group (G1*) are spliced together with the optical waveguides (LW1 to LW4) of the second group (G1) and in that the splicing operation is controlled by means of the temporal group intensity distribution of the light which is coupled over during the splicing process from at least one optical waveguide (for example LW2) of one group to at least one optical waveguide (for example LW2*) of the other group.

21. Method according to Claim 20, characterized in that the splicing process is controlled by means of that individual intensity distribution (PS(t)) which is assigned to those two optical waveguides (for example LW3/LW3*) of the two groups (G1, G1*) which are aligned the worst with respect to one another.

22. Method according to one of Claims 19 to 21, characterized in that after the splicing operation of in each case two corresponding optical waveguides (for example LW1*/LW1) of the first and second groups (G1*, G1), the associated individual intensity distribution (PiS, where i = 1 to 4) of the light guided in them is selectively measured.

23. Method according to one of the preceding claims, characterized in that, in a first measurement step, in each case two mutually assigned optical waveguides (for example LW1*, LW1) of the first and second groups (G1*, G1) are chronologically successively aligned with one another during the displacement movement, in that, in this ideal alignment state, in each case the associated temporal individual intensity distribution (PiID, where i = 1 to 4) of the light (MS1 to MS4) guided in them is selectively determined and stored, in that, in a second measurement step, there is determined for the first and the second group (G1*, G1) of optical waveguides an optimum alignment state during the displacement operation, in which, for all of the corresponding optical waveguides (for example LW1*, LW1) of the first and second groups (G1*, G1), an intensity maximum of the light (MS1 to MS4) guided in them is respectively produced simultaneously, and the two groups (G1*, G1) are moved there, in that, in this optimum alignment state for in each case two corresponding optical waveguides (for example LW1*, LW1), the associated temporal individual intensity distribution (PiVER, where i = 1 to 4) of the light (MS1 to MS4) guided in them is measured and stored, in that, in a third measurement step, the two groups (G1*, G1) are brought into the optimum alignment state determined, where their corresponding optical waveguides are spliced together, and in that, finally, after the splicing operation, for in each case two optical waveguides (for example LW1*, LW1) connected to one another, the associated temporal individual intensity distribution (PiS, where i = 1 to 4) of the light (MS1 to MS4) guided in them is determined and stored, and in that from the temporal individual intensity distributions obtained in this way in three measurement steps for in each case two optical waveguides (for example LW1*, LW1) connected to one another, the splice loss of the said waveguides is selectively determined.

24. Device for carrying out the method according to one of the preceding claims, in which a first holding apparatus (HL1*) with a first of the two groups (G1*) of optical waveguides (LW1* to LW4*) is arranged such that it can be displaced relative to a second holding apparatus (HL1) with a second group (G1) of optical waveguides (LW1 to LW4) at least once in at least one direction parallel to that plane in which the longitudinal axes of the optical waveguides (LW1 to LW4) of the second group (G1) lie, in which a transmitting device (SE1) is coupled to at least one optical waveguide (LW1 to LW4) of one of the two groups (G1) for the purpose of coupling in light during the displacement operation, in which a receiving device (EM1) is coupled to at least one optical waveguide (LW1* to LW4*) of the other group (G1*) and records the temporal intensity profile of the light which, during the displacement operation, is constantly coupled from the optical waveguide (LW1 to LW4) which is respectively coupled to the transmitting device (SE1) into the optical waveguide (LW1* to LW4*) which is respectively coupled to the receiving device (EM1), in which the two holding devices (HL1*, HL1) with the two groups (G1*, G1) can be moved relative to one another in such a way that with the light recorded during the displacement operation, a temporal group intensity distribution (PMi*, PMi) can be obtained which separately assigns individual intensity distributions (J1* to J4* and J1 to J4, respectively) to the optical waveguides (LW1* LW4* and LW1 to LW4, respectively), through which light passes, of the respective group (G1*, G1), and in which a memory device (MEM1) is provided which stores this group intensity distribution (PMi* and PMi, respectively) and, from the individual intensity distributions thereof, determines the relative local position (X* and X, respectively) of the optical waveguides (LW1 to LW4, LW1* to LW4*), through which light passes, in the respective group (G1*, G1) and stores it for evaluation purposes.

25. Device according to Claim 24, characterized in that a correlator (COR) for determining an optimum alignment position of the two groups (G1*, G1) from their two associated, local group intensity distributions (PMI*, PMI) is provided, in which, for all of the corresponding optical waveguides (for example LW1*, LW1) of the first and second groups (G1*, GI), an intensity maximum of the light (MS1 to MS4) guided in them is respectively produced simultaneously.

26. Device according to either of Claims 24 and 25, characterized in that provision is made of a respective display apparatus (AZ1, AZ2) for visual representation of the temporal and/or local group intensity distribution (PMI, PMI*) of the light guided in the optical waveguides (LW1 to LW4, LW1* to LW4*) of the two groups (G1, G1*).

27. Device according to one of Claims 24 to 26, characterized in that provision is made of a display apparatus (DSP1) for displaying the cross-correlation function (COR (Δx)) between the temporal group intensity distributions of the light guided in the first and second groups (G1*, G1).

28. Device according to one of Claims 24 to 27, characterized in that provision is made of a control unit (CTU) for displacing the holding apparatuses (for example HL1*).

29. Device according to one of Claims 24 to 28, characterized in that the receiving device (EM1) has at least one photosensitive element (PD1).

30. Device according to one of claims 24 to 29, characterized in that the device is part of an optical waveguide splicing apparatus.

**Revendications**

1. Procédé pour déterminer la position dans l'espace de guides d'ondes lumineuses (LW1 à LW4, LW1* à LW4*), qui sont respectivement disposés à plusieurs en deux groupes (G1, G1*) et, dans ces groupes, respectivement l'un près de l'autre dans un même plan, en utilisant un dispositif d'émission (SE1) affecté à un des deux groupes (G1, G1*), le premier des deux groupes (G1*) étant déplacé par translation au moins une fois par rapport au deuxième groupe (G1) dans au moins une direction parallèle au plan dans lequel se trouve les axes longitudinaux des guides d'ondes lumineuses (LW1 à LW4) du deuxième groupe (G1), de la lumière étant, pendant ce processus de translation, injectée par le dispositif d'émission (SE1) dans au moins un guide d'ondes lumineuses (LW1 à LW4) de l'un des deux groupes (G1), de la lumière, provenant du guide d'ondes lumineuses respectif (LW1 à LW4) couplé au dispositif d'émission (SE1), étant en permanence, pendant le processus de translation, transférée par couplage respectivement dans au moins un guide d'ondes lumineuses (LW1* à LW4*) de l'autre groupe (G1*), la variation respective dans le temps de l'intensité de la lumière transférée par couplage dans ce guide d'ondes lumineuses (LW1* à LW4*) de l'autre groupe (G1*), étant, pendant le processus de translation, enregistrée, le mouvement relatif des deux groupes (G1, G1*) l'un par rapport à l'autre étant effectué de telle sorte que, avec la lumière reçue pendant le mouvement de translation, une répartition en fonction du temps de l'intensité de groupe (PMi* et/ou PMi) est obtenue et mémorisée, grâce à laquelle des répartitions individuelles d'intensité (I1* à I4* et/ou I1 à I4) peuvent être attribuées séparément aux guides d'ondes lumineuses parcourus par la lumière (LW1* à LW4* et/ou LW1 à LW4) du groupe respectif (G1*, G1), la position relative dans l'espace (X* et/ou X) des guides d'ondes lumineuses (LW1* à LW4*, LW1 à LW4) dans le groupe respectif (G1*, G1) étant, à partir de ces répartitions individuelles de l'intensité issues de la répartition de l'intensité de groupe (PMi* à PMi) qui a été mémorisée, déterminée, puis enregistrée à des fins de post-traitement.

2. Procédé selon la revendication 1
**caractérisé par le fait**
que le premier groupe (G1*) est déplacé par translation au moins une fois par rapport au deuxième groupe (G1).

**3.** Procédé selon la revendication 1
**caractérisé par le fait**
que le deuxième groupe (G1) est déplacé par translation au moins une fois par rapport au premier groupe (G1*).

**4.** Procédé selon la revendication 1
**caractérisé par le fait**
que le deuxième groupe (G1) et le premier groupe (G1*) sont déplacés simultanément par translation l'un par rapport à l'autre.

**5.** Procédé selon l'une des revendications précédentes
**caractérisé par le fait**
que de la lumière provenant des guides d'ondes lumineuses (LW1 à LW4) du deuxième groupe (G1) est couplée, d'une façon continue, dans un guide d'ondes lumineuses d'observation (par exemple, LW1*) du premier groupe (par exemple, G1*), par le fait que, pendant le mouvement relatif des deux groupes (G1, G1*) et à partir de la variation dans le temps de l'intensité de la lumière couplée dans ce guide d'ondes lumineuses d'observation (par exemple, LW1*), une répartition de l'intensité de groupe (PMi) des guides d'ondes lumineuses (LW1 à LW4) du deuxième groupe (G1) est obtenue et mémorisée et par le fait que, à partir de la répartition de l'intensité de groupe mémorisée (PMi), des répartitions individuelles de l'intensité (J1 à J4) sont affectées séparément aux guides d'ondes lumineuses parcourus par la lumière (LW1 à LW4) du deuxième groupe (G1), à partir desquelles la position spatiale relative (X) de ces guides d'ondes lumineuses (LW1 à LW4) dans le deuxième groupe (G1) est mémorisée.

**6.** Procédé selon l'une des revendications 1 à 4
**caractérisé par le fait**
que de la lumière provenant des guides d'ondes lumineuses (LW1* à LW4*) du premier groupe (G1*) est couplée, d'une façon continue, dans un guide d'ondes lumineuses d'observation (par exemple LW1) du deuxième groupe (par exemple, G1), par le fait que, pendant le mouvement relatif des deux groupes (G1, G1*) et à partir de la variation dans le temps de l'intensité de la lumière couplée dans ce guide d'ondes lumineuses d'observation (LW1), une répartition de l'intensité de groupe (PMi*) des guides d'ondes lumineuses (LW1* à LW4*) du premier groupe (G1*) est obtenue et mémorisée et par le fait que, à partir de la répartition de l'intensité de groupe mémorisée (PMi*), des répartitions individuelles de l'intensité (J1* à J4*) sont affectées séparément aux guides d'ondes lumineuses parcourus par la lumière (LW1* à LW4*) du premier groupe (G1*), à partir desquelles la position spatiale relative (X*) de ces guides d'ondes lumineuses (LW1* à LW4*) dans le premier groupe (G1*) est mémorisée.

**7.** Procédé selon l'une des revendications 5 ou 6
**caractérisé par le fait**
qu'un guide d'ondes lumineuses du premier et/ou du second groupe (G1*, G1) est utilisé comme guide d'ondes lumineuses d'observation.

**8.** Procédé selon l'une des revendications 5 ou 6
**caractérisé par le fait**
qu'un guide d'ondes lumineuses de mesure prévu à cet effet est utilisé comme guide d'ondes lumineuses d'observation.

**9.** Procédé selon l'une des revendication 1 à 4
**caractérisé par le fait**
que, pendant le processus de translation, de la lumière est couplée, d'une façon continue, à partir des guides d'ondes lumineuses (LW1 à LW4) du deuxième groupe (G1), respectivement dans chaque guide d'ondes lumineuses respectif correspondant (LW1* à LW4*) du deuxième groupe (G1*), et par le fait que, à partir de la variation dans le temps de la répartition de l'intensité de groupe de la lumière couplée dans les guides d'ondes lumineuses (LW1* à LW4*) du premier groupe (G1*), on détermine directement la position spatiale relative des guides d'ondes lumineuses (LW1* à LW4*) dans le premier groupe (G1*) par rapport à la position spatiale des guides d'ondes lumineuses (LW1 à LW4) dans le deuxième groupe (G1).

**10.** Procédé selon l'une des revendications précédentes
**caractérisé par le fait**
que la répartition spatiale de l'intensité de groupe (PMi*) de la lumière dans les guides d'ondes lumineuses (LW1* à LW4*) du premier groupe (G1*) est corrélée avec la répartition spatiale de l'intensité de groupe (PMi) de la lumière dans les guides d'ondes lumineuses (LW1 à LW4) du deuxième groupe (G1).

**11.** Procédé selon l'une des revendications précédentes
**caractérisé par le fait**
que chaque guide d'ondes lumineuses (par exemple, LW1*) du premier groupe (G1*) et/ou le guide d'ondes lumineuses du deuxième groupe (G1), qui lui correspond, sont placés individuellement dans un moyen de guidage (FM*, FM).

**12.** Procédé selon l'une des revendications précédentes
**caractérisé par le fait**
que le premier groupe (G1*) et le deuxième groupe (G1) sont déplacés au moins une fois dans un sens et dans l'autre, l'un par rapport à l'autre, par une sorte de mouvement vibratoire (mouvement "jitter").

**13.** Procédé selon l'une des revendications précédentes
**caractérisé par le fait**
que la translation relative l'un par rapport à l'autre des deux groupes (G1*, G1) a une ampleur correspondant au moins au décalage résiduel maximum de deux guides d'ondes lumineuses correspondants (LW1*, LW1).

**14.** Procédé selon l'une des revendications précédentes
**caractérisé par le fait**
que le premier groupe (G1*) est rapproché par translation au moins une fois par rapport au deuxième groupe (G1) dans un plan (par exemple, dans la direction y) perpendiculairement au premier plan d'observation (par exemple, dans la direction x) et par le fait que, ce faisant, la variation dans le temps de la répartition de l'intensité de groupe de la lumière couplée est enregistrée.

**15.** Procédé selon l'une des revendications précédentes
**caractérisé par le fait**
que, à partir de la variation dans le temps de la répartition de l'intensité de groupe (PMi, PMi*), on détermine sélectivement le décalage latéral de deux guides d'ondes lumineuses, correspondants et affectés l'un à l'autre, (par exemple, LW1* / LW1) du premier et du deuxième groupe (G1*, G1).

**16.** Procédé selon l'une des revendications précédentes
**caractérisé par le fait**
que, pendant le processus de translation, on oriente l'un sur l'autre dans un alignement précis, chronologiquement l'un après l'autre, respectivement deux guides d'ondes lumineuses correspondants (par exemple, LW1*, LW1) du premier et du deuxième groupe (G1*, G1) et par le fait que, dans cette position d'alignement idéal de deux guides d'ondes lumineuses correspondants (par exemple, LW1*, LW1), on mesure individuellement et mémorise la répartition individuelle en fonction du temps de l'intensité (PilD avec i = 1 à 4) de la lumière qui y est guidée (MS1 à MS4).

**17.** Procédé selon l'une des revendications précédentes
**caractérisé par le fait**
que le premier et le deuxième groupe (G1*, G1) sont amenés dans une position d'alignement optimum, présentant l'affinité la plus grande, dans laquelle on obtient, simultanément pour tous les guides d'ondes lumineuses correspondants (par exemple, LW1*, LW1) du premier et du deuxième groupe (G1*, G1), respectivement un maximum d'intensité de la lumière qui y est guidée (MS1 à MS4).

**18.** Procédé selon la revendication 17
**caractérisé par le fait**
que, dans cette position d'alignement optimum, respectivement pour deux guides d'ondes lumineuses affectés l'un à l'autre (par exemple, LW1* / LW1), on mesure individuellement et mémorise la répartition individuelle en fonction du temps (PiVER avec i = 1 à 4) de la lumière qui y est guidée (MS1 à MS4).

**19.** Procédé selon l'une des revendications 17 ou 18
**caractérisé par le fait**
que le premier et le second groupe (G1*, G1) sont amenés dans leur position d'alignement optimum et par le fait qu'on épisse, en particulier qu'on soude l'un avec l'autre, respectivement deux guides d'ondes lumineuses correspondants (par exemple, LW1* / LW1) du premier et du deuxième groupe (G1*, G1).

**20.** Procédé selon l'une des revendications précédentes

**caractérisé par le fait**
que les guides d'ondes lumineuses (LW1* à LW4*) du premier groupe (G1*) sont épissés avec les guides d'ondes lumineuses (LW1 à LW4) du deuxième groupe (G1) et par le fait que le processus d'épissurage est contrôlé au moyen de la répartition de groupe en fonction du temps de l'intensité de la lumière qui est couplée, pendant l'épissurage, d'au moins un guide d'ondes lumineuses (par exemple, LW2) d'un des groupes dans au moins un guide d'ondes lumineuses (par exemple LW2*) de l'autre groupe.

21. Procédé selon la revendication 20
    **caractérisé par le fait**
    que l'épissurage est contrôlé au moyen de la répartition individuelle de l'intensité (PS(t)) affectée aux deux guides d'ondes lumineuses (par exemple LW3 / LW3*) des deux groupes (G1, G1*), qui sont les plus mal alignés l'un par rapport à l'autre.

22. Procédé selon l'une des revendications 19 à 21
    **caractérisé par le fait**
    que, après le processus d'épissurage de respectivement deux guides d'ondes lumineuses correspondants (par exemple, LW1* / LW1) du premier et du deuxième groupe (G1*, G1), on mesure sélectivement la répartition individuelle respective de l'intensité en fonction du temps (PiS avec i = 1 à 4) de la lumière qui y est guidée.

23. Procédé selon l'une des revendications précédentes
    **caractérisé par le fait**
    que, dans une première étape de mesure, on oriente dans un alignement précis l'un par rapport à l'autre, pendant le mouvement de translation, chronologiquement l'un après l'autre, respectivement deux guides d'ondes lumineuses affectés l'un à l'autre (par exemple, LW1* / LW1) du premier et du deuxième groupe (G1*, G1), par le fait que, dans cette position d'alignement optimum, on détermine et mémorise sélectivement la répartition individuelle respective de l'intensité en fonction du temps (PiID avec i = 1 à 4) de la lumière qui y est guidée (MS1 à MS4), par le fait que, dans une deuxième étape de mesure, on détermine, pendant le processus de translation, pour le premier et le deuxième groupe (G1*, G1) de guides d'ondes lumineuses, une position d'alignement optimum dans laquelle on obtient, simultanément pour tous les guides d'ondes lumineuses correspondants (par exemple, LW1* / LW1) du premier et du deuxième groupe (G1*, G1), respectivement un maximum de l'intensité de la lumière qui y est guidée (MS1 à MS4) et qu'on amène les deux groupes dans cette position, par le fait que, dans cette position d'alignement optimum, on mesure et mémorise, pour respectivement deux guides d'ondes lumineuses correspondants (par exemple, LW1* / LW1), la répartition individuelle respective en fonction du temps de l'intensité (PiVER avec i = 1 à 4) de la lumière qui y est guidée (MS1 à MS4), par le fait que, dans une troisième étape de mesure, on amène les deux groupes (G1*, G1) dans la position d'alignement optimum, qui a été déterminée, qu'on y épisse l'un à l'autre leurs guides d'ondes lumineuses correspondants et que, finalement, après le processus d'épissurage, on détermine et mémorise, pour respectivement deux guides d'ondes lumineuses connectés l'un à l'autre (par exemple, LW1* / LW1), la répartition individuelle respective de l'intensité en fonction du temps (PiS avec i = 1 à 4) de la lumière qui y est guidée (MS1 à MS4) et par le fait que, à partir des répartitions individuelles de l'intensité en fonction du temps ainsi obtenues au cours des trois étapes de mesure pour respectivement deux guides d'ondes lumineuses connectés l'un à l'autre (par exemple, LW1* / LW1), on détermine sélectivement leur affaiblissement d'épissure.

24. Dispositif pour la mise en oeuvre du procédé selon l'une des revendications précédentes dans lequel un premier mécanisme de retenue (HL1*) avec le premier des deux groupes de guides d'ondes lumineuses (LW1* à LW4*) est placé de telle sorte qu'il puisse être déplacé par translation, par rapport à un deuxième mécanisme de retenue (HL1) avec un deuxième groupe (G1) de guides d'ondes lumineuses (LW1 à LW4), au moins une fois dans au moins une direction parallèle au plan dans lequel se trouvent les axes longitudinaux des guides d'ondes lumineuses (LW1 à LW4) du deuxième groupe (G1), dans lequel, pour le couplage de lumière pendant le processus de translation, un dispositif d'émission (SE1) est couplé à au moins un guide d'ondes lumineuses (LW1 à LW4) d'un des deux groupes (G1), dans lequel, sur au moins un guide d'ondes lumineuses (LW1* à LW4*) de l'autre groupe (G1*), est couplé un dispositif de réception (EM1) qui enregistre la variation dans le temps de l'intensité de la lumière qui est couplée d'une façon continue, pendant le processus de translation, du guide d'ondes lumineuses (LW1 à LW4), respectivement couplé au dispositif d'émission (SE1), dans le guide d'ondes lumineuses (LW1* à LW4*) respectivement couplé au dispositif de réception (EM1), dans lequel les deux mécanismes de retenue (HL1*, HL1) avec les deux groupes (G1*, G1) peuvent être déplacés l'un par rapport à l'autre de telle sorte qu'il soit possible, avec la lumière enregistrée pendant le mouvement de translation, d'obtenir une répartition dans le temps de l'intensité de groupe (PMi*, PMi), qui affecte séparément aux guides d'ondes lumineuses traversés par la lumière (LW1* à LW4* et LW1 à LW4) du groupe respectif (G1*, G1) des répartitions individuelles de l'intensité (J1* à J4* et J1 à J4) et dans lequel est prévu un dispositif de mémorisation (MEM1) qui mémorise cette répartition de l'intensité de groupe (PMi* et PMi) et qui détermine et mémorise à des fins de post-traitement, à partir de leurs répartitions individuelles de l'intensité, la position spatiale relative (X* et X) des guides d'ondes lumineuses traversés par la lumière (LW1* à LW4*, LW1 à LW4) dans le groupe respectif (G1*, G1).

25. Dispositif selon la revendication 24
**caractérisé par le fait**
qu'il est prévu un corrélateur (COR) pour la détermination d'une position d'alignement optimum des deux groupes (G1*, G1) à partir de leurs répartitions spatiales respectives de l'intensité de groupe (PMI*, PMI), dans laquelle on obtient, simultanément pour tous les guides d'ondes lumineuses correspondants (par exemple LW1*, LW1) du premier et du deuxième groupe (G1*, G1), respectivement un maximum d'intensité de la lumière qui y est guidée (MS1 à MS4).

26. Dispositif selon l'une des revendications 24 ou 25
**caractérisé par le fait**
qu'il est prévu respectivement un dispositif de visualisation (AZ1, AZ2) pour la représentation visuelle de la répartition dans le temps et/ou dans l'espace de l'intensité de groupe (PMI, PMI*) de la lumière guidée dans les guides d'ondes lumineuses (LW1 à LW4, LW1* à LW4*) des deux groupes (G1, G1*).

27. Dispositif selon l'une des revendications 24 à 26
**caractérisé par le fait**
qu'il est prévu un dispositif de visualisation (DSP1) pour la visualisation de la fonction de corrélation croisée (COR (Δx)) entre les répartitions dans le temps de l'intensité de groupe de la lumière guidée dans le premier et le deuxième groupe (G1*, G1).

28. Dispositif selon l'une des revendications 24 à 27
**caractérisé par le fait**
qu'il est prévu un appareil de commande (CTU) pour la translation des mécanismes de retenue (par exemple HL1*).

29. Dispositif selon l'une des revendications 24 à 28
**caractérisé par le fait**
que le dispositif de réception (EM1) comporte au moins un élément sensible à la lumière (PD1).

30. Dispositif selon l'une des revendications 24 à 29
**caractérisé par le fait**
que le dispositif fait partie d'un appareil à épisser pour guides d'ondes lumineuses.

FIG 1

FIG 2

FIG 6

FIG 3

FIG 4

FIG 5

FIG 7

EP 0 582 116 B1

FIG 8

FIG 9

FIG 10